# EUROPÄISCHE PATENTSCHRIFT

(11) **EP 1 328 433 B1**
(45) Veröffentlichungstag und Bekanntmachung des Hinweises auf die Patenterteilung: **08.03.2006**
(21) Anmeldenummer: 01975830.9
(22) Anmeldetag: 23.10.2001
(51) Int. Cl.: B62D 1/19, B62D 1/18, B60N 2/23, F16B 5/07

(54) **KUPPLUNGSVORRICHTUNG, INSBESONDERE FÜR ZUMINDEST ZWEI RELATIV ZUEINANDER VERSTELLBARE TEILE**
COUPLING DEVICE, IN PARTICULAR FOR AT LEAST TWO PIECES ADJUSTABLE RELATIVE TO EACH OTHER
DISPOSITIF D'ACCOUPLEMENT, EN PARTICULIER POUR AU MOINS DEUX PARTIES AJUSTABLES L'UNE PAR RAPPORT A L'AUTRE

(30) Priorität: 25.10.2000 AT 18312000; 21.02.2001 AT 2702001
(43) Veröffentlichungstag der Anmeldung: 23.07.2003
(73) Patentinhaber: STIWA-Fertigungstechnik Sticht Gesellschaft m.b.H, A-4800 Attnang-Puchheim (AT)
(72) Erfinder: HEIML, Roland, A-4870 Vöcklamarkt (AT)
(74) Vertreter: Secklehner, Günter
(86) Internationale Anmeldenummer: PCT/AT2001/000342
(87) Internationale Veröffentlichungsnummer: WO 2002/034607

(56) Entgegenhaltungen:
- EP-A- 0 064 290
- WO-A-01/81149
- FR-A- 1 498 802
- GB-A- 2 087 808
- US-A- 5 595 399
- US-A- 5 657 516
- US-A- 5 787 759
- US-A- 6 092 957

## Beschreibung

Die Erfindung betrifft eine Kupplungsvorrichtung, insbesondere für zumindest zwei relativ zueinander verstellbare Teile, wie im Oberbegriff des Anspruches 1 beschrieben ist, und die Verwendung der Kupplungsvorrichtung als energieabsorbierende Deformationsanordnung, wie diese im Anspruch 41 beschrieben ist.

Eine Verstelleinrichtung für eine Lenkwelle eines Kraftfahrzeuges ist aus der US 6,092,957 A, US 5,595,399 A und US 5,787,759 A bekannt, die gegenüber einer im Fahrzeug ortsfest angeordneten Halterung in Richtung der Längsachse der Lenkwelle verschiebbar und in einer dazu radialen Richtung verschwenkbar angeordnet sowie über eine zwischen der Halterung und dem Tragelement angeordnete Kupplungsvorrichtung in ihrer eingestellten Relativlage fixierbar gehalten ist. Die Kupplungsvorrichtung umfasst ein auf einem Spannbolzen in Richtung seiner Längsachse mittels eines Betätigungshebels entgegen der Kraft einer Feder verstellbares Kupplungselement und ein an einem Durchbruch in der Halterung angrenzendes feststehendes Kupplungselement. Das verstellbare und feststehende Kupplungselement sind jeweils an ihren einander zugewandten Eingriffsflächen mit einem Profil versehen und sind nach der Art einer Zahnleiste mit starren bzw. unnachgiebigen Kupplungsteilen ausgebildet sowie über eine Verstellvorrichtung parallel zur Längsachse des Spannelementes zwischen einer ausgekuppelten entspannten Öffnungsstellung und einer eingekuppelten fixierenden Sperrstellung verstellbar angeordnet. Die Eingriffsflächen der starren bzw. unnachgiehig Kupplungsteile der Kupplungselemente sind in der Sperrstellung mit einer Anpresskraft gegeneinander abgestützt und ist eine eingeatellte Relativlage der Lenkwelle formschlüssig fixiert. Der Nachteil dieser bekannten Kupplungsvorrichtung liegt vor allem darin, daß durch die rasterartige Anordnung der Kupplungsteile nur in vorbestimmten Abständen eine Relativlage zwischen zwei relativ zueinander verstellbarer Teile fixierbar ist.

Aus der US 5,657,516 A sind Kupplungselemente bekannt, die jeweils mit einer Vielzahl von eine Aufnahmefläche derselben geringfügig überragenden Kupplungsteilen aus elastisch nachgiebig reversiblen Kunststoff versehen sind. Eine Eingriffsfläche der Kupplungsteile weist ein Profil auf und ist mit über diese verteilt angeordneten und diese überragenden, geringfügig elastisch nachgiebigen Vorsprüngen oder einer elastisch nachgiebige Schicht versehen. Diese aus dem Stand der Technik bekannte Kupplungsvorrichtung ist im allgemeinen als sogenannter "Klettverschluss" bekannt und wird beispielsweise an einer Kleidung als Verschluss eingesetzt.

Bei dieser bekannten Kupplungsvorrichtung ist von Nachteil, daß die eingekuppelten Kupplungselemente nur mit der durch die elastische Verformung der Kupplungsteile ausgelösten, begrenzten Haftkraft und keiner äußeren Anpresskraft gegeneinander abgestützt sind bzw. aneinander haften und deshalb von der Kupplungsvorrichtung nur niedrige Kräfte in zur Aufnahmefläche paralleler Richtung aufgenommen werden können, ohne dabei eine Verlagerung der zueinander in der Relativlage festgelegten Teile bzw. der Kupplungselemente zu bewirken.

Darüber hinaus ist aus der WO 01/81149 A eine Kupplungsvorrichtung zum Fixieren einer eingestellten Relativlage einer Lenkwelle bekannt, die ein verstellbares Kupplungselement mit mehreren starren bzw. unnachgiebigen Kupplungsteilen in Form von zwei Zahnleisten aufweist und an der Eingriffsfläche mit einem Profil versehen ist. Eine Oberfläche eines Teiles bildet das feststehende Kupplungselement, das eine planare Eingriffsfläche ausbildet. In einer eingekuppelten Sperrstellung sind die Zahnleisten vom verstellbaren Kupplungselement mit einer voreinstellbaren Anpresskraft gegen die planare Eingriffsfläche am Teil angepresst und die relativ zueinander verstellbaren Teile über einen punkt- und/oder linienförmigen Reibschluss zwischen den starren Kupplungsteilen und der planaren Eingriffsfläche lösbar zueinander fixiert. Nachteilig ist, daß bereits bei geringfügigen Unebenheiten der Eingriffsfläche am Teil nur ein verminderter Anteil der Kupplungsteile der Zahnleisten mit der Eingriffsfläche am Teil eingreifen und dadurch die Gefahr der unzureichenden Klemmung für das Positionieren der eingestellten Relativlage der Lenkwelle resultiert.

Aus der gattungsgemäßen US 6,092,955 A ist eine Kupplungsvorrichtung für eine Verstell- und Fixiervorrichtung von Lenkwellen von Kraftfahrzeugen bekannt, bei der das feststehende Kupplungselement eine ebenflächige Eingriffsfläche aufweist und aus Kunststoff besteht und das verstellbare Kupplungselement Kupplungsteile in Form von Zahnleisten ausbildet und aus Metall besteht, wobei in einer eingekuppelten fixierenden Sperrstellung die Zahnleisten vom verstellbaren Kupplungselement in den relativ weichen Kunststoff vom feststehenden Kupplungselement eindringen und die eingestellte Relativlage der Lenkwelle fixieren. Bei dieser aus dem Stand der Technik bekannten Kupplungsvorrichtung ist mit einem erhöhten Verschleiß vom feststehenden Kupplungselement aus weichem Kunststoff zu rechnen und erfordert diese einen relativ großen Einbauraum.

Eine Verstelleinrichtung für eine Lenkwelle eines Kraftfahrzeuges bestehend aus einer an der Karosserie des Fahrzeuges und im Querschnitt etwa U-förmig ausgebildeten Halterung und einem zwischen dieser angeordneten Tragelement zur Lagerung der Lenkwelle ist aus der GB 2 087 808 A bekannt. Die Kupplungsvorrichtung umfaßt ein auf einem quer zur Längsachse der Lenkwelle verlaufenden Spannelement verstellbares Kupplungselement zwischen dem Betätigungshebel und der Halterung. Zwischen den Seitenschenkeln der Halterung ist ein das Tragelement abstützendes Führungsprofil und zwischen diesem eine vom Spannelement aufgenommene Distanzhülse angeordnet. In einer Sperrstellung wird über das zwischen dem Betätigungshebel und der Halterung vorhandene Kupplungselement sowie den Schenkeln des Führungsprofiles und der Halterung ein flächiger Reibschluß bewirkt.

Eine Verstell- und Fixiervorrichtung für eine Lenkwelle von Kraftfahrzeugen ist auch aus der FR 1,498,802 A bekannt, bei der eine eingestellte Relativlage von relativ zueinander verstellbaren Teilen über eine zwischen den Teilen angeordnete Kupplungsvorrichtung fixierbar ist.

Der vorliegenden Erfindung liegt die Aufgabe zugrunde, eine Verstelleinrichtung mit einer dieser zugeordneten, eine Kupplungsvorrichtung aufweisenden Fixiereinrichtung zu schaffen, die eine stufenlose Fixierung einer eingestellten Relativlage von relativ zueinander verstellbaren Teilen ermöglicht.

Die Aufgabe der Erfindung wird durch die Merkmale des Anspruches 1 gelöst. Die sich durch die Merkmale des Kennzeichenteiles des Anspruches 1 ergebenden überraschenden Vorteile dabei sind, daß durch die Ausbildung der Kupplungsteile der miteinander einkuppelbaren Kupplungselemente aus elastisch nachgiebigen reversiblen Kunststoff selbst beim Aufeinandertreffen einzelner Kupplungsteile diese seitlich weggedrückt oder in sich eingedrückt oder gegeneinander vorgespannt werden und somit ein Großteil der sich in Eingriff befindlichen Kupplungsteile zur Übertragung von in zur Aufnahmefläche paralleler oder schräger Richtung einwirkenden Kräften herangezogen werden kann. Auf diese Weise können nunmehr die Kupplungselemente in jeder Relativlage miteinander eingekuppelt werden und ist somit eine stufenlose Fixierung einer eingestellten Relativlage von relativ zueinander verstellbaren Teilen und eine Feinjustierung der Teile in mehrere Raumrichtungen möglich. Ein weiterer Vorteil der kleingebauten Kupplungselemente liegt vor allem auch darin, daß einerseits durch deren kleinen Baugröße nur ein geringer Einbauraum erforderlich ist und andererseits kurze Verstellwege zum Einkuppeln oder Auskuppeln der einrastbaren Kupplungselemente erforderlich sind.

Durch die Merkmale im Anspruch 2 ist eine hohe Sicherheit gegen Lösen der eingekuppelten Sperrstellung gegeben und können durch die sich einstellende hohe Anpreßkraft zwischen den Kupplungselementen hohe Kräfte von der Kupplungsvorrichtung in zur Aufnahmefläche paralleler Richtung aufgenommen werden.

Vorteilhaft ist auch die Ausführungsform nach Anspruch 3, da durch die Beaufschlagung der Kupplungselemente mit der Anpreßkraft während deren Eingriffes ein unbeabsichtigtes Lösen einer eingekuppelten fixierten Sperrstellung verhindert werden kann.

Gemäß Anspruch 4 bleibt die Variation der Ausbildung der Kupplunpelemente offen.

Die Weiterbildung nach Anspruch 5 erweist sich als vorteilhaft, da die gesamte Profiloberfläche zur Kraftübertragung ausgenutzt werden kann und eine unerwünschte Verstellung der Relativlage zwischen zwei zueinander fixierten Teilen in zur Aufnahmefläche paralleler Richtung unterbunden wird. Von Vorteil ist aber auch, daß verschleißbedingte Abnutzungen der Kupplungsteile keine Beeinträchtigung der Fixierung der Teile herbeiführen.

Durch die Ausbildung nach Anspruch 6 kann die Kupplungsvorrichtung beispielsweise auch als energieabsorbierende Sicherheitseinrichtung verwendet werden, wobei bei nicht zu hohen Aufprallkräften diese absorbiert werden können, ohne die Kupplungsvorrichtung zu zerstören.

Von Vorteil sind auch die Ausbildungen nach den Ansprüchen 7 bis 11, wodurch zwei relativ zueinander verstellbare Teile, insbesondere in einem Kraftfahrzeug, in jeder ihrer eingestellten Relativlage über einen zumindest bereichsweisen Kraft- und Formschluß zwischen den eingekuppelten Kupplungselementen lösbar zueinander gehalten werden können.

Die Weiterbildung nach Anspruch 12 ermöglicht, daß beim Aufeinandertreffen zumindest zweier Profilspitzen der beiden relativ zueinander verstellbaren Kupplungselemente diese zusammengedrückt werden, wobei das verdrängte Material in die zu den Profilspitzen benachbarten Profiltäler verdrängt werden und daß in Folge der Anpreßkraft zwischen den sich in einer fixierenden Sperrstellung befindlichen Kupplungselemente im Bereich der aufeinanderstoßenden Profilspitzen ein Reibschluß und durch die Einformung der aufeinandertreffenden Profilspitzen zusätzlich ein Formschluß erreicht wird, sodaß die lösbar zueinander fixierbaren Teile besonders gut zur Übertragung von hohen Kräften in zur Aufnahmefläche paralleler und/oder schräger Richtung geeignet sind.

Von Vorteil sind aber auch die Ausbildungen nach den Ansprüchen 13 bis 15, da in Abhängigkeit von den geometrischen Formen und Materialien der elastischen Kupplungselemente bzw. Kupplungsteile eine einfache Anpassung an unterschiedliche Anforderungen ermöglicht wird.

Vorteilhaft ist auch eine Weiterbildung nach Anspruch 16, da eine der Oberflächen des Tragkörpers zur Befestigung der Kupplungselemente am Teil und die weitere Oberfläche als Eingriffsfläche für die lösbare Fixierung der Relativlage ausgebildet ist. Weiters wird durch die Verteilung der Kupplungsteile über die Oberfläche des Tragkörpers eine stufenlose Verstellung und Fixierung einer eingestellten Relativlage ermöglicht.

Nach Ansprach 17 ist eine Anpassung der Eigenschaften der Kupplungselemente an unterschiedliche Anforderungen möglich.

Die Ausgestaltungen nach den Ansprüchen 18 bis 23 ermöglichen eine Beeinflussung der Fixierung der relativ zueinander verstellbaren Teile unmittelbar in der die Eingriffsfläche bildenden Profiloberfläche und dadurch kann beispielsweise eine optimale Anpassung an Anforderungen; wie der Kraftübertragung, erfolgen. Vor allem kann durch die Ausbildung von Vorsprüngen auch bei niedriger Anpreßkraft zwischen den Kupplungselementen eine zuverlässige Fixierung der eingestellten Relativlage zwischen zwei Teilen erreicht und insbesondere die bei einem Fabrzeugaufprall erzeugte Energie weitestgehend von den Kupplungsteilen und den Vorsprüngen aufgenommen werden und wird ein unerwünschtes Abheben der Kupplungselemente voneinander und somit ein Lösen der Sperrstellung der zueinander fixierten Teile vermieden. Daher ist gegebenenfalls im wesentlichen nur in Längsrichtung der Kupplungselemente eine Verschiebung möglich, was gleichermaßen zu einer Energieabsorption führt.

Von Vorteil sind aber auch die Ausbildungen nach den Ansprüchen 24 und 25, da in Abhängigkeit von den geometrischen Formen und Materialien der elastisch nachgiebigen reversiblen Kupplungsteile eine einfache Anpassung an unterschiedliche Anforderungen ermöglicht ist.

Die Weiterbildungen nach den Ansprüchen 26 bis 29 erweisen sich als vorteilhaft, da eine Erhöhung der zu übertragenden Kraft oder gegebenenfalls eines Momentes gegeben ist. Weiters ist von Vorteil, daß die gesamte Profiloberfläche zur Kraftübertragung und für eine sichere im wesentlichen form- und kraftschlüssige Fixierung der Teile ausgenutzt werden kann.

Durch die Ausbildung nach Anspruch 30 kann ein das Kupplungselement aufweisender Teil in einem Herstellungsverfahren kostengünstig hergestellt werden.

Die Ausgestaltungen nach den Ansprüchen 31 bis 37 ermöglichen die Fixierung einer beliebig eingestellten Relativlage, insbesondere einer Neigung und/oder Länge einer Lenkwelle von einem Kraftfahrzeug oder Neigung, Länge und Höhe zwischen relativ zueinander verstellbaren Teilen, beispielsweise zwischen dem Rückenteil und Sitzteil eines Sitzes oder einer Karosserie und einem weiteren Teil einer Höhenverstelleinrichtung eines Rückhalteelementes.
Dabei erweist sich der konstruktiv einfache und platzsparende Aufbau der Kupplungsvorrichtung als vorteilhaft.

Von Vorteil ist auch die Anordnung der Kupplungselemente, wie im Anspruch 38 und 39 beschrieben, wodurch eine rasche und ausschließlich von der Zykluszeit der Druckbeaufschlagung abhängige Zykluszeit für eine Fixierung bzw. Arretierung einer vorbestimmbaren Relativlage der Teile zueinander ermöglicht ist.

Eine vorteilhafte Weiterbildung gemäß dem Anspruch 40 ermöglicht den Einsatz von standardisierten Stellantrieben zum Ein- und Auskuppeln der Kupplungselemente.

Von Vorteil ist auch die Verwendung der Kupplungselemente als energieabsorbierende Deformationsanordnung für eine in Längsrichtung und/oder quer zur Längsrichtung einwirkende Kraft bzw. Energie, wie im Anspruch 41 beschrieben, da durch die Deformation der Kupplungselemente bzw. Kupplungsteile zumindest ein Teil der kinetischen Energie absorbiert werden kann.

Zum besseren Verständnis der Erfindung wird diese anhand der in den nachfolgenden Figuren gezeigten Ausführungsbeispiele näher erläutert.

Es zeigen:
- Fig. 1: eine Lenkwellenverstelleinheit in Seitenansicht und in stark vereinfachter, schematischer Darstellung;
- Fig. 2: eine Lenkwellenverstelleinheit mit wenigstens einer erfindungsgemäßen Verstellund Fixiereinrichtung in entspannter Öffnungsstellung in Seitenansicht geschnit- ten gemäß den Linien II-II in Fig. 1 und in stark vereinfachter, schematischer Dar- stellung;
- Fig. 3: ein Tragelement in Seitenansicht, geschnitten und in stark vereinfachter, schematischer Darstellung;
- Fig. 4: einen Teilbereich der erfindungsgemäßen Fixiereinrichtung nach Fig. 3 in Seitenansicht, geschnitten und in stark vereinfachter, schematischer Darstellung:
- Fig. 5: das Tragelement und Fixierelement in Stirnansicht, geschnitten gemäß den Linien V-V in Fig. 3 und in stark vereinfachter, schematischer Darstellung;
- Fig. 6: ein erfindungsgemäßes Bodenelement des Fixierelementes in Draufsicht und in stark vereinfachter, schematischer Darstellung;
- Fig. 7: einen Teilbereich des Tragelementes mit einer sich in einer entspannten Öffnungsstellung befindlichen Kupplungsvorrichtung in Stirnansicht, geschnitten und in stark vereinfachter, schematischer Darstellung:
- Fig. 8: einen Teilbereich der Fixiereinrichtung nach Fig. 7, insbesondere der Kupplungsvorrichtung, in einer ausgekuppelten entspannten Öffnungsstellung in Stirnansicht, geschnitten und in stark vereinfachter, schematischer Darstellung;
- Fig. 9: eine andere Ausführungsvariante der Kupplungsvorrichtung der Fixiereinrichtung mit den in einer eingekuppelten fixierten Sperrstellung und in Eingriff befindlichen Kupplungselementen in Stirnansicht, geschnitten und in stark vereinfachter, schematischer Darstellung;
- Fig. 10: einen Fahrzeugsitz mit einer anderen Ausführungsvariante einer erfindungsgemäßen Verstelleinrichtung und Fixiereinrichtung in Seitenansicht und in stark vereinfachter, schematischer Darstellung;
- Fig. 11: den Fahrzeugsitz in Stirnansicht mit der Fixiereinrichtung und Verstelleinrichtung in Stirnansicht, geschnitten und in stark vereinfachter, schematischer Darstellung:
- Fig. 12: einen Teilbereich der Verstell- und Fixiereinrichtung des Fahrzeugsitzes mit einer weiteren Ausführung der Kupplungsvorrichtung in Stirnansicht, geschnitten und in stark vereinfachter, schematischer Darstellung;
- Fig. 13: eine andere Ausführungsvariante der sich außer Eingriff befindlichen Kupplungselemente der Kupplungsvorrichtung zwischen zwei relativ zueinander verstellund fixierbarer Teile, geschnitten und in stark vereinfachter, schematischer Darstellung;
- Fig. 14: einen Senkrechtschnitt durch sich außer Eingriff befindliche, auf relativ zueinander verstellbaren Teilen befestigte erfindungsgemäße Kupplungselemente in stark vereinfachter, schematischer Darstellung;
- Fig. 15: einen Senkrechtschnitt durch sich in Eingriff befindliche, auf relativ zueinander verstellbaren Teilen befestigte erfindungsgemäße Kupplungselemente in stark vereinfachter, schematischer Darstellung;
- Fig. 16: einen Senkrechtschnitt durch sich außer Eingriff befindliche, auf relativ zueinander verstellbaren Teilen befestigte erfindungsgemäße Kupplungselemente in stark vereinfachter, schematischer Darstellung;
- Fig. 17: einen Senkrechtschnitt durch sich in Eingriff befindliche, auf relativ zueinander verstellbaren Teilen befestigte erfindungsgemäße Kupplungselemente in stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

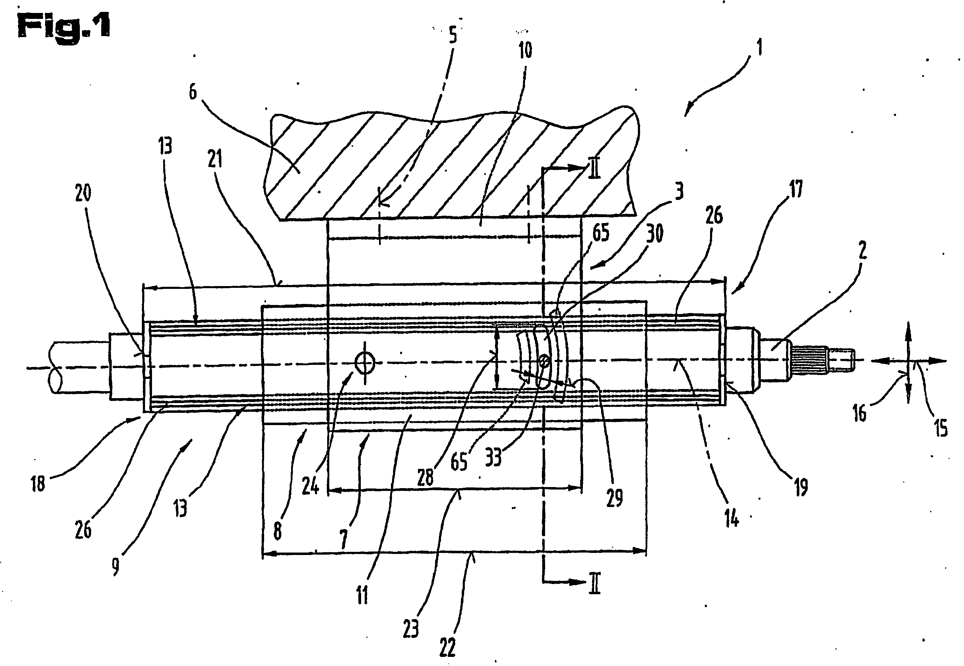

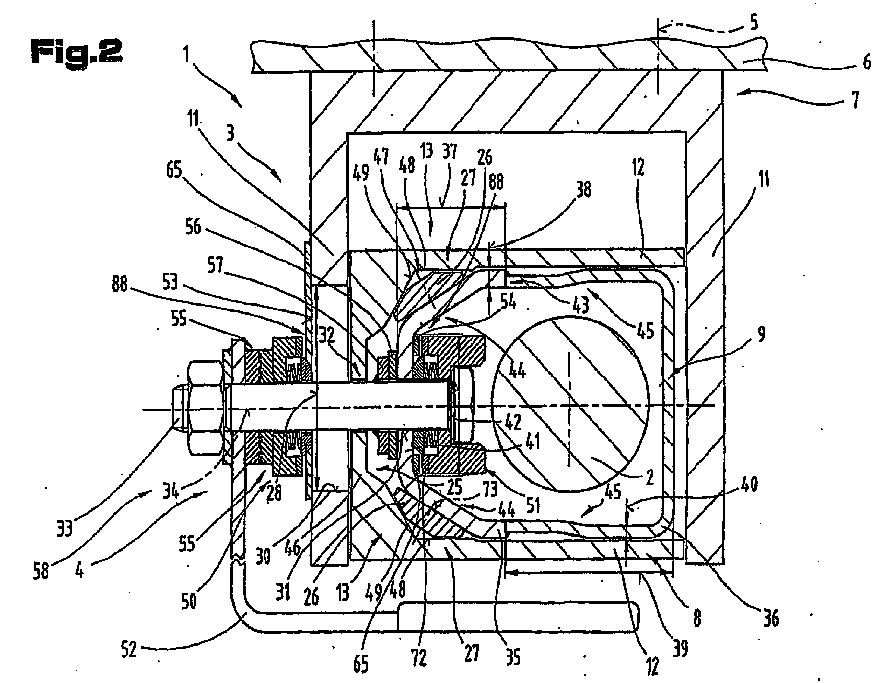

In den gemeinsam beschriebenen Fig. 1 und 2 ist eine Lenkwellenverstelleinheit 1 mit einer die Lage einer Lenkwelle 2 veränderbaren Verstelleinrichtung 3 und einer dieser zugeordneten, die Lage der Lenkwelle 2 positionierenden Fixiereinrichtung 4 gezeigt. Die Verstelleinrichtung 3 für die Lenkwelle 2 weist wenigstens eine mit einem oder mehreren Befestigungsmittel 5 an einer Karosserie 6 ortsfest verbundenen Halterung 7, ein von der Halterung 7 zumindest bereichsweise umfassendes Profilstück 8 und ein vom Profilstück 8 längenverschiebbar gelagertes Tragelement 9 auf. Eine Basis 10 der einen mehreckigen, insbesondere U-förmigen Querschnitt, aufweisenden Halterung 7 ist zur Karosserie 6 benachbart angeordnet und mit dieser über die Befestigungsmittel 5, insbesondere Schrauben, mit der Karosserie 6 bedarfsweise lösbar verbunden. Zwischen den sich gegenüberliegenden und sich von der Basis 10 der Halterung 7 bzw. der Karosserie 6 in entgegengesetzter Richtung erstreckende Schenkel 11 ist das zu der Halterung 7 bevorzugt um 90° dazu verdreht angeordnete und etwa U-förmig ausgebildete Profilstück 8 angeordnet. Zwischen sich gegenüberliegenden Profilschenkeln 12 des Profilstückes 8 und unter Anordnung einer zwischen dem Profilstück 8 und dem Tragelement 9 angeordneten Führungsvorrichtung 13 ist das Tragelement 9 längenverschiebbar geführt.

Die Lenkwelle 2 ist gegenüber der in einem Fahrzeug ortsfest angeordneten Halterung 7 in Richtung einer Längsmittelachse 14 - gemäß Doppelpfeil 15 - verschiebbar und zumindest in einer dazu radialen Richtung - gemäß Doppelpfeil 16 - verschwenkbar angeordnet. Die Lenkwelle 2 ist teleskopierbar ausgebildet und mit in gegenüberliegenden Endbereichen 17, 18 angeordneten Lagern 19, 20 in dem Tragelement 9 positioniert gehalten bzw. gelagert. Eine in Richtung der Längsmittelachse 14 der Lenkwelle 2 bemessene Länge 21 des Tragelementes 9 ist größer bemessen als eine Länge 22 des Profilstückes 8 und eine Länge 23 der Halterung 7. Das um eine Schwenkachse 24 in zur Längsmittelachse 14 der Lenkwelle 2 verschwenkbeweglich gelagerte Profilstück 8 weist an einer dem Tragelement 9 zugewandten Innenseite 25 zumindest über einen Teil seiner Länge 22 eine Führungsbahnanordnung 27 auf, die mit diesen zugeordneten Führungselementen 26, wie beispielsweise Führungsleisten, Führungskalotten, Führungskulissen, Kulissensteinen etc., korrespondieren. Die Führungselemente 26 sind mit dem Tragelement 9 form- und/oder kraftschlüssig verbunden, insbesondere vcrschraubt, vernietet, verschweißt, verklebt etc. und erstrecken sich zumindest über einen Teil der Länge 21, insbesondere über die gesamte Länge 21 des Tragelementes 9.

Wie aus der Zusammenschau der Fig. 1 und 2 zu entnehmen ist, weist zumindest einer der sich von der Karosserie 6 in entgegengesetzter Richtung erstreckende Schenkel 11 der Halterung 7, in zur Längsmittelachse 14 radialer Richtung einen mit einer Länge 28 und einer Breite 29 gekrümmten, insbesondere zu der Schwenkachse 24 zugewandt konvex verlaufenden Durchbruch 30 auf, der es ermöglicht, eine Verstellung - gemäß Doppelpfeil 16 - vorzunehmen. Ein einen Längsschlitz 31 des Tragelementes 9 und eine Bohrung 32, insbesondere Führungsbohrung, des Profilstückes 8 und den Durchbruch 30 der Halterung 7 durchsetzendes Spannelement 33 ist entlang einer quer zur Längsmittelachse 14 der Lenkwelle 2 ausgerichteten Mittelachse 34 angeordnet. Natürlich können auch mehrere Spannelemente 33 eingesetzt werden. Das vom Profilstück 8 zumindest teilweise umfaßte ein- oder mehrteilige Tragelement 9 besteht, wie in dieser Ausführung gezeigt, aus einem ersten Teil 35 und einem mit diesem verbundenen, gegenüberliegenden weiteren Teil 36. Die miteinander zu verbindenden Teile 35, 36 können natürlich mit allen aus dem Stand der Technik bekannten form- und/oder kraftschlüssigen Verbindungsarten, wie beispielsweise Schweißen, Kleben. Löten, Schrauben, Nieten etc. miteinander verbunden werden.

Im zusammengesetzten Zustand bildet das Tragelement 9 einen profilartigen Querschnitt aus. Zumindest einer der beiden Teile 35; 36, zweckmäßig der der Innenseite 25 des Profilstückes 8 zugewandte Teil 35, weist einen in zur Längsmittelachse 14 der Lenkwelle 2 parallel verlaufender Richtung den Längsschlitz 31 auf. Der erste Teil 35 ist mit einer parallel zu der Mittelachse 34 verlaufenden Höhe 37 und Wandstärke 38 ausgebildet, wobei zweckmäßigerweise die Höhe 37 geringer und die Wandstärke 38 größer bemessen ist, als eine Höhe 39 und Wandstärke 40 des weiteren Teiles 36. Der erste Teil 35 weist einen beispielsweise trapezförmigen Querschnitt auf, wobei ein an einer dem weiteren Teil 36 gegenüberliegenden Basis 41 ausgebildetes Breitenmaß 42 kleiner bemessen ist, als ein im Verbindungsbereich 43 der beiden miteinander zu verbindenden Teile 35, 36 bemessenes Breitenmaß. Die zwischen der Basis 41 des ersten Teiles 35 und den Verbindungsbereichen 43 ausgebildeten Teile von Seitenschenkel 44 sind in Richtung der Höhe 37 geneigt zueinander angeordnet und erweitern sich mit zunehmendem Abstand von der Basis 41 gemäß einem Winkel und bilden zur Mittelachse 34 geneigte Zwischenteile und an diese anschließende, parallel zur Mittelachse 34 verlaufende Endteile aus. Die zwischen einer der Basis 41 des ersten Teiles 35 gegenüberliegenden Basis des weiteren Teiles 36 und dem Verbindungsbereich 43 ausgebildeten Teile von Seitenschenkel 45 sind in Richtung der Höhe 39 vorerst parallel zur Mittelachse 34 verlaufend angeordnet, an denen mit einer leichten Verjüngung Zwischenteile und nachfolgend parallel zur Mittelachse 34 verlaufende Endteile anschließen. Als Tragelement 9 kann natürlich jedes aus dem Stand der Technik bekannte ein- oder mehrteilige Tragelement 9 verwendet werden.

Eine mit der Bohrung 32, insbesondere Führungsbohrung, ausgestattete Basis 46 des Profilstückes 8 ist zu dem mit dem Durchbruch 30 ausgestatteten Schenkel 11 der Halterung 7 benachbart, von welcher sich in einer zum Schenkel 11 bzw. zur Basis 46 entgegengesetzter Richtung beidseitig und parallel zueinander die Profilschenkel 12 erstrecken. Eine an der Innenseite 25 zwischen den gegenüberliegenden Profilschenkel 12 bemessene Öffnungsweite ist zumindest geringfügig größer bemessen, als eine maximale Breite am Außenumfang des Tragelementes 9. Die Profilschenkel 12 verlaufen zweckmäßig parallel zu der Mittelachse 34. In zwischen der Basis 46 und den Profilschenkeln 12 des Profilstückes 8 geneigt zu der Mittelachse 34 verlaufende Übergangsbereiche 47 sind Führungsbahnen 48, 49 bildende Führungsbahnanordnungen 27 vertieft angeordnet. Wie in diesem Ausführungsbeispiel gezeigt, ist die Führungsvorrichtung 13 durch die an der Außenfläche im Bereich der Zwischenteile der Seitenschenkel 44 des ersten Teiles 35 angeordneten Führungselemente 26, insbesondere Profilleisten, und der diesen zugeordneten, an der Innenseite 25 in den Übergungsbereichen 47 des Profilschenkels 8 angeordneten Führungsbahnanordnungen 27 gebildet. Zweckmäßig weist das Führungselement 26, insbesondere die Profilleiste, in einer zu deren Längserstrekkung senkrechten Ebene einen mehreckigen, insbesondere trapezförmigen Querschnitt auf. Zumindest eine der Führungsbahnen 48; 49, insbesondere die Führungsbahn 48, verläuft parallel zur Längsmittelachse 14 der Lenkwelle 2, während die weitere Führungsbahn 49. ausgehend von der Basis 46 in Richtung der Profilschenkel 12, geneigt und mit zunehmendem Abstand in Richtung des Profilschenkels 12 erweiternd ausgebildet ist. Durch die um die Mittelachse 34 voneinander distanziert und geneigt zueinander angeordneten Führungsvorrichtungen 13 ist im gelösten Zustand der Fixiereinrichtung 4. daher während eines Verstell vorganges der Lenkwelle 2, eine Führung des Tragelementes 9 bzw. der Lenkwelle 2 in zur Längsmitielachae 14 paralleler und in einer dazu vertikalen Richtung gegeben.

Die der Verstelleinrichtung 3 zugeordnete Fixiereinrichtung 4 weist zumindest ein, insbesondere zwei von dem Spannelement 33 verdrehgesichert aufgenommene Verstellvorrichtungen 50. 51 und einen von dem Spannelement 33 verschwenkbeweglich gelagerten Betätigungshebel 52 auf. Zumindest eine Verstellvorrichtung 51 ist zwischen der Lenkwelle 2 und dem Tragelement 9 und zumindest eine weitere Verstellvorrichtung 50 zwischen der Halterung 7 und dem Betätigungshebel 52 angeordnet. Die Verstellvorrichtungen 50. 51 überdecken zumindest bereichsweise eine Aufnahmefläche 53 des Schenkels 11 der Halterung 7 und eine Aufnahmefläche 54 im Bereich der Basis 41 des ersten Teiles 35 des Tragelementes 9. Die senkrecht auf die Mittelachse 34 ausgerichteten Aufnahmeflächen 53, 54 verlaufen zueinander parallel. Zwischen der der Halterung 7 zugeordneten Verstellvorrichtung 50 und dem Betätigungshebel 52 sind ein oder mehrere ineinandergreifende und gegeneinander verdrehbare, vom Spannelement 33 verschwenkbeweglich gelagerte Betätigungselemente 55 angeordnet, die in zur Verschwenkbewegung von einer entspannten ausgekuppelten Öffnungsstellung in eine fixierende Sperrstellung in zur Umfangsrichtung der Betätigungselemente 55 senkrechter Richtung mit sich verjüngenden Funktionsflächen versehen sind. Zweckmäßigerweise ist dabei eines der Betätigungselemente 55 mit der Ventellvorrichtung 50 und das weitere Betätigungselement 55 mit dem Betätigungshebel 52 bewegungsfest verbunden, insbesondere verschweißt, verlötet, verschraubt, vernietet etc. Während einer Verschwenkbewegung des Betätigungshebels 52 von einer eingekuppelten Sperr- in eine ausgekuppelte Öffnungsstellung werden infolge des gegenseitigen Abstützens der aufeinander ausgerichteten Funktionsflächen der gegenüberliegenden Betätigungselemente 55 entgegen der Wirkung von elastischen Rückstellkräften die Verstellvorrichtungen 50, 51 in eine gelöste bzw. entspannte ausgekuppelte Öffnungsstellung verbracht.

Natürlich können alle beliebigen, aus dem Stand der Technik bekannten Betätigungselemente 55, die entgegen elastischen Rückstellkräften wirkbar sind, wie beispielsweise Exzenterscheiben, Nockenscheiben etc., verwendet werden. Auf den genaueren Aufbau und die Funktionsweise der Fixiereinrichtung 4 wird in den weiteren Fig. noch näher darauf eingegangen.

Wie der Fig. 2 weiters zu entnehmen, ist das Spannelement 33 in seiner Einbaulage über eine zwischen dem Profilstück 8 und dem Tragelement 9 angeordnete Kunststoffscheibe 56 und einer zu dieser parallel übergeordneten Blechscheibe 57 positioniert. Die Verbindung zwischen der Blechscheibe 57 und dem Spannelement 33 kann über alle aus dem Stand der Technik bekannten form- und/oder kraftschlüssigen Verbindungselemente erfolgen. Der Betätigungshebel 52. die Betätigungselemente 55 sowie die Verstellvorrichtungen 50, 51 sind in Längsrichtung des Spannelement 33 über eine am freien Ende des Spannelementes 33 angeordnete Befestigungsanordnung 58, insbesondere Schraubenanordnung, im wesentlichen spielfrei zueinander angeordnet und bedarfsweise lösbar fixiert.

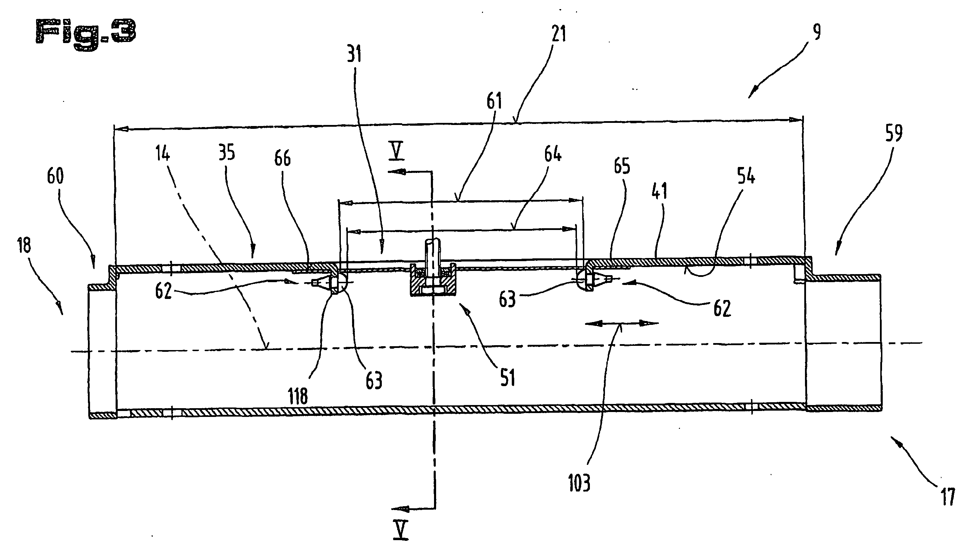

In den gemeinsam beschriebenen Fig. 3 bis 6 ist das Tragelement 9 im Längsschnitt und Querschnitt gezeigt. Das zweckmäßig mehrteilig ausgebildete Tragelement 9 ist an den gegenüberliegenden Endbereichen 17, 18 mit kreiszylinderförmigen Lageraufnahmestellen 59, 60 zur Aufnahme von nicht weiters dargestellten Lagern ausgestattet. Wie aus dieser Fig. ersichtlich, verlaufen die kreiszylindrischen Lageraufnahmestellen 59, 60 konzentrisch um die Längsmittelachse 14 der nicht weiters dargestellten Lenkwelle.

Eine Länge 61 des Längsschlitzes 31 ist durch in gegenüberliegenden Endbereichen angeordnete Anschlagelemente 62 begrenzt. Die quer zur Längsmittelachse 14 ausgerichteten Anschlagelemente 62 weisen eine ein Dämpfungsorgan 63 aufnehmende Bohrung auf. Das Dämpfungsorgan 63 wird zweckmäßig durch einen Kunststoff, insbesondere einem Elastomer, gebildet. Ein durch die gegenüberliegenden Dämpfungsorgane 63 begrenzter Verstellweg 64 ist zumindest geringfügig kleiner bemessen als die Länge 61 des Längsschlitzes 31. Die von dem Längsschlitz 31 gegenüberliegenden Kanten fungieren als Endanschläge, sodaß bei einem Überschreiten des Verstellweges 64 die Verstellvorrichtung 51 an einer der Kanten zum kurzzeitigen Anliegen kommt.

Wie der Fig. 3 weiters zu entnehmen, ist der zu der Längsmittelachse 14 parallel verlaufenden Aufnahmefläche 54 des ersten Teiles 35 des Tragelementes 9 zumindest ein, insbesondere sind mehrere in Längsrichtung und parallel zueinander verlaufende streifenförmige bzw. flächige Kupplungselemente 65 zugeordnet. Zweckmäßig werden die Kupplungselemente 65, insbesondere ein flächiger Tragkörper derselben, über eine Kleberschichte 66 mit der Aufnahmefläche 54 des ersten Teiles 35 ortsfest verbunden. Eine Länge der Kupplungselemente 65 ist zumindest gleich, zweckmäßig größer bemessen als eine Länge 61 des Längsschlitzes 31.

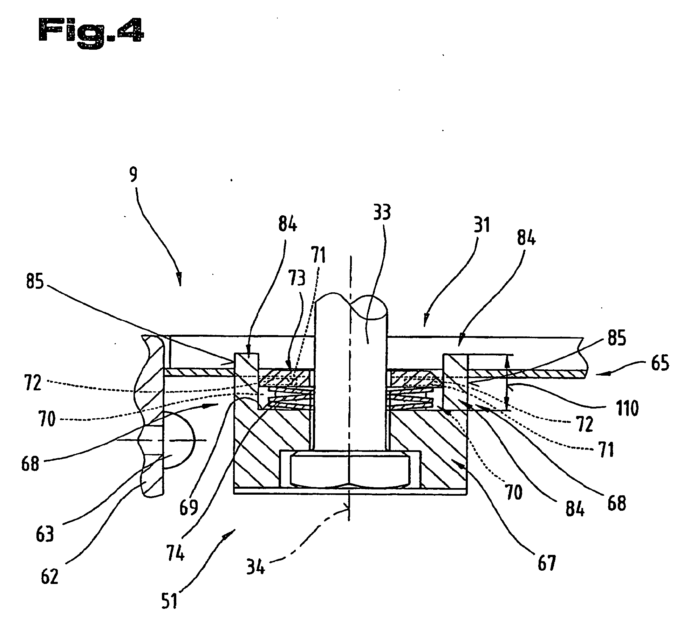

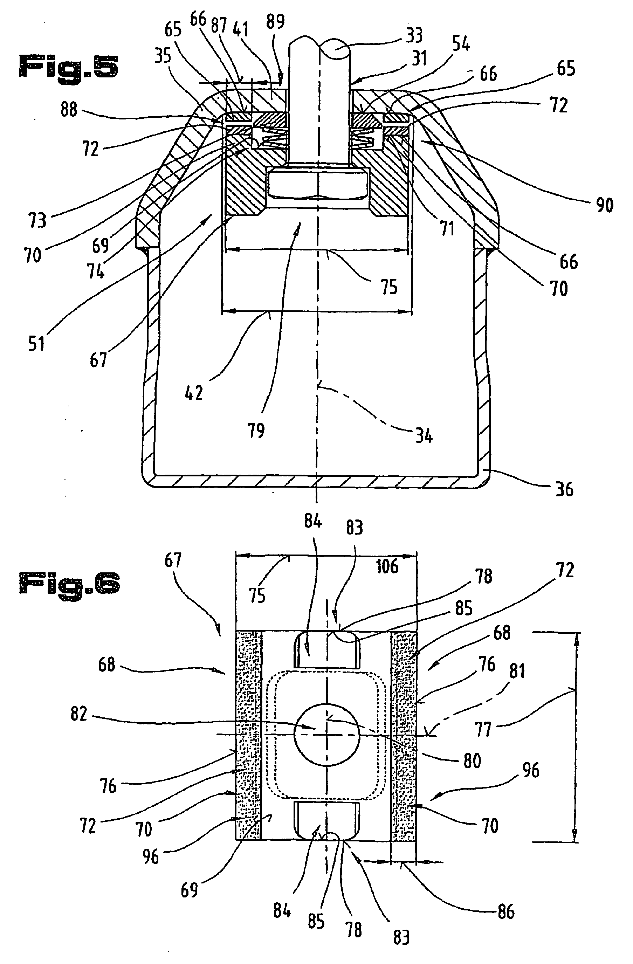

In den Fig. 4 und 5 ist ein Teilbereich der Verstellvorrichtung 51 und des Tragelementes 9 dargestellt. Die Verstellvorrichtung 51 besteht vorzugsweise aus einem etwa streifenförmigen Bodenelement 67, das in Richtung seiner Längserstreckung an zwei gegenüberliegenden Längsseitenbereichen 68 senkrecht auf eine Grundfläche 69 ausgerichtete, etwa prismatische Längsstege 70 aufweist, mit deren zur Grundfläche 69 parallel verlaufende Aufnahmeflächen 71 weitere flächige Kupplungselemente 72 verbunden sind, und zumindest einem zwischen einem streifenförmigen Führungselement 73 und dem Bodenelement 67 angeordneten, elastisch verformbaren Rückstellelement 74. In einer eingekuppelten fixierenden Sperrstellung sind die miteinander in Eingriff bringbaren Kupplungselemente 65, 72 mit einer von zumindest einem Rückstellelement 74 erzeugten Druckkraft beaufschlagt. Zumindest eines der Kupplungselemente 65: 72 ist mit der Druckkraft der Verstellvorrichtungen 50; 51 beaufschlagt. Die Verstellvorrichtung 50 ist in den Fig. 4 und 5 nicht weiters dargestellt.

Wie der Fig. 6 besser zu entnehmen ist, können die Längsstege 70 an dem Bodenelement 67 einstückig angeformt werden oder über ein form- und/oder kraftschlüssiges Verbindungselement mit diesem verbunden werden. Eine quer zur Längsmittelachse 14 bemessene Breite 75 des Bodenelementes 67 distanziert zwei parallel zueinander verlaufende Längsseitenflächen 76, welche rechtwinkelig zu durch eine Länge 77 voneinander distanzierten Querseitenflächen 78 verlaufen. An einer der Grundfläche 69 gegenüberliegenden Unterseite 79 ist eine Ausnchmung für eine verdrehgesicherte Aufnahme des Spannelementes 33 angeordnet. Eine Längsmittelachse 80 und eine auf diese senkrecht ausgerichtete Quermittelachse 81 bilden einen gemeinsamen Schnittpunkt für eine von dem Spannelement 33 durchsetzte Bohrung 82. Die Längsmittelachse 80 verläuft parallel zu der Längsmittelachse 14 der Lenkwelle 2. An den distalen Endbereichen 83 des Bodenelementes 67 sind bevorzugt im Randbereich desselben senkrecht auf die Grundfläche 69 ausgerichtete, etwa prismatische Führungs- und/oder Anschlagelemente 84 angeordnet, welche in den Längsschlitz 31 vorragen. Eine Breite der Führungs- und/oder Anschlagelemente 84 ist zumindest geringfügig kleiner bemessen als eine Öffnungsweite des Längsschlitzes 31. Die rechtwinkelig zu den Längsseitenflächen 76 ausgebildeten Seitenflächen des Bodenelementes 67 verlaufen deckungsgleich zu Anschlagflächen 85 der Führungs- und/oder Anschlagelemente 84, wie dies in Fig. 6 zu ersehen ist.

Die Breite 75 des Bodenelementes 67 ist zweckmäßig geringfügig kleiner bemessen als das Breitenmaß 42 im Bereich der Basis 41 des Tragelementes 9. Das streifenförmige Kupplungselement 72 ist über eine Kleberschichte 66 mit der Aufnahmefläche 71 des Längssteges 70 verbunden. Dem Bodenelement 67 kann ein streifenförmiges Kupplungselement 72 oder mehrere über die Grundfläche 69 des Bodenelementes 67 verteilt angeordnete Kupplungselemente 72 zugeordnet werden. Eine Kupplungselementbreite 86 des am Bodenelement 67 angeordneten Kupplungselementes 72 ist zweckmäßig gleich bemessen wie eine Kupplungselementbreite 87 des dem ersten Teil 35 des Tragelementes 9 zugeordneten Kupplungselementes 65. Natürlich besteht auch die Möglichkeit, daß eine der beiden Kupplungselementbreiten 86: 87 größer oder kleiner ausgebildet ist.

Das sich am RücksteHetement 74 abstützende streifenförmige Pührungsdement 73 weist eine planparallel zu der Aufnahmefläche 54 des ersten Teiles 35 verlaufende Oberfläche auf. Das Führungselement 73 weist an dessen distalen Endbereichen mit den Führungs- und/oder Anschlagelementen 84 korrespondierende Ausnchmungen auf, sodaß das Führungselement 73 zwischen den Führungs- und/oder Anschlagelementen 84 und den in Breitenrichtung gegenüberliegenden Längsstegen 70 aufgenommen ist.

Der Einfachheit halber ist die Verstellvorrichtung 50 nur in der Fig. 2 dargestellt, wobei der der Verstellvorrichtung 50 zugewandten Aufnahmefläche 53 des Schenkels 11 der Halterung 7 in Längserstreckung des Durchbruches 30 zumindest ein, insbesondere mehrere parallel voneinander distanzierte Kupplungselemente 65 zugeordnet sind. Zweckmäßig sind die Kupplungselemente 65 zumindest um die Breite 29 des Durchbruches 30 voneinander distanziert.

Die miteinander in Eingriff bringbaren Kupplungselemente 65. 72 bilden eine bedarfsweise lösbare Kupplungsvorrichtung 88 zwischen zumindest zwei relativ zueinander verstellbarer bevorzugt flächiger Teile 89, 90 bzw. Elemente aus. Die relativ zueinander verstellbaren Teile 89, 90 bilden die Verstelleinrichtung 3 aus. Dabei bilden der erste Teil 35 des Tragelementes 9 und der Schenkel 11 der Halterung 7 - in Fig. 3 bis 6 nicht dargestellt - einen ersten Teil 89 und zumindest ein Teilbereich der Verstellvorrichtungen 50. 51, insbesondere das Bodenelement 67, einen weiteren Teil 90 aus.

Wie die vorhergehenden Ausführungen zeigen, sind die Halterung 7, das Tragelement 9. insbesondere der erste Teil 35. sowie die Verstellvorrichtungen 50, 51, insbesondere das Bodenelement 67, aus einem metallischen und/oder nichtmetallischen Werkstoff gebildet, an deren Befestigungsflächen bzw. Aufnahmeflächen 53, 54, 71 oder Grundfläche 69 zumindest bereichsweise Kupplungselemente 65, 72 angeordnet sind.

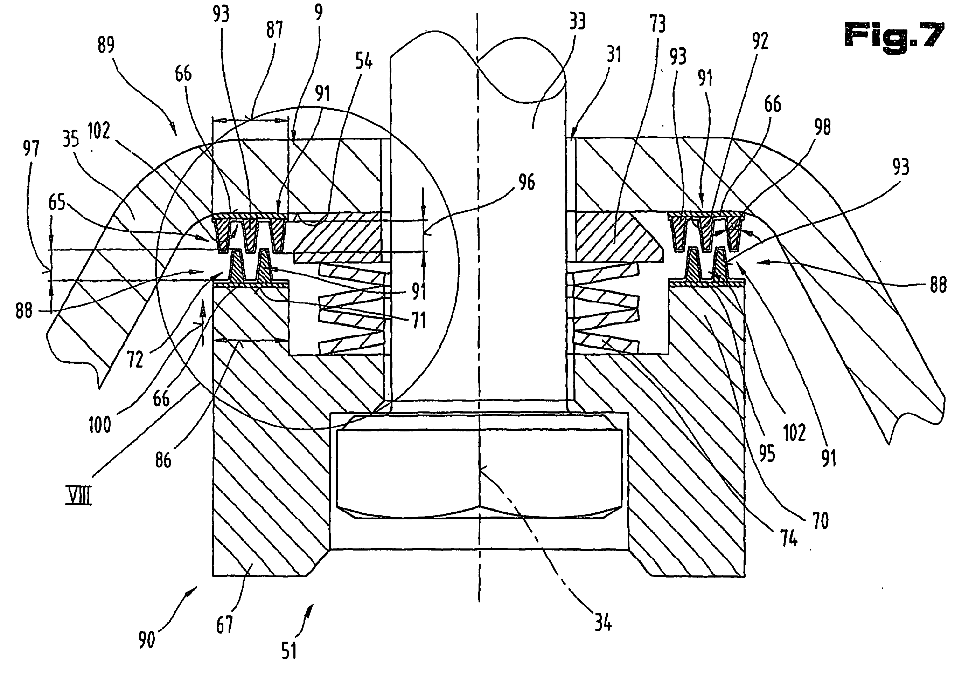

In den gemeinsam beschriebenen Fig. 7 bis 9 ist ein Teilbereich des ersten Teiles 89. insbesondere des Tragelementes 9, und der über eine Kupplungsvorrichtung 88 miteinander in Eingriff bringbare weitere Teil 90, insbesondere das Bodenelement 67, der Verstellvorrichtung 51, dargestellt. Wie bereits zuvor ausführlich beschrieben, ist das bzw, sind die ersten Kupplungselemente 65 über die Klebeschichte 66 mit der Aufnahmefläche 54 des ersten Teiles 89, insbesondere dem ersten Teil 35 des Tragelementes 9, verbunden.

Das oder die diesen Kupplungselementen 65 gegenüberliegenden weitere Kupplungselemente 72 sind mit insbesondere dem flächigen Tragkörper über die Klebeschichte 66 mit den Aufnahmeflächen 71 der Längsstege 70 des weiteren Teiles 90, insbesondere des Bodenelementes 67, verbunden. Wie in diesen Fig. dargestellt, befinden sich die Kupplungselemente 65, 72 außer Eingriff und somit in einer entspannten Öffnungsstellung. Die in Längsrichtung in einem den Längsschlitz 31 begrenzenden Bereich angeordneten Kupplungselementen 65 sind in Breitenrichtung voneinander distanziert angeordnet und verlaufen parallel zueinander und parallel zu dem Längsschlitz 31. Die Kupplungselemente 65, 72 weisen bevorzugt in Richtung der Kupplungselementbreite 86, 87 mehrere voneinander distanzierte Kupplungsteile 91 auf, die sich senkrecht, auslebend von einem bevorzugt flächigen Tragkörper 92 in Richtung des Bodenelementes 67 erstrecken. Die Kupplungsteile 91 sind zweckmäßig über eine Oberfläche des gesamten Tragkörpers 92 der Kupplungselemente 65, 72 reihenweise in Richtung der Länge und/oder Kupplungselementbreite 87 derselben oder diagonal versetzt zueinander angeordnet. Die Kupplungselemente 65, 72 weisen daher eine Vielzahl von über eine Aufnahmefläche 53, 54, 71 oder einem Tragkörper 92 verteilt angeordneten Kupplungsteile 91 auf, die im wesentlichen in einer fixierenden Sperrstellung formschlüssig miteinander in Eingriff stehen und eine Relativlage der Teile 89, 90 lösbar fixieren. Zumindest einem Kupplungselement 65; 72 ist zumindest eine Verstellvorrichtung, insbesondere ein elektrischer, mechanischer etc. Stellantrieb, zugeordnet.

Die beispielsweise in einem Hohlprägeverfahren hergestellten Kupplungselemente 65, 72 bilden ausgeformte bzw. ausgehohlte Kupplungsteile 91 aus, deren hohler Kern 93 des Tragkörpers 92 zweckmäßig mit festigkeits- und/oder zähigkeitserhöhenden Materialien, insbesondere Polymer, zumindest oberflächenbenetzend und/oder vollständig ausgefüllt werden. Eine äußere strukturierte Oberfläche 94, insbesondere Eingriffsfläche bzw. Verbindungsfläche, des flächigen Tragkörpers 92 der Kupplungsteile 91 weist eine Vielzahl von kleinen, insbesondere mikroskopischen, geringfügig elastisch nachgiebigen, reversiblen Vorsprüngen 95 auf. Natürlich kann die Oberfläche 94, insbesondere Eingriffsfläche bzw. Verbindungsfläche des Tragkörpers 92 der Kupplungsteile 91 durch eine geringfügig elastisch nachgiebige reversible Schichte gebildet werden.

Zweckmäßig sind zumindest Teilbereiche der Oberfläche 94 bzw. Eingriffsfläche, insbesondere die Vorsprünge 95, elastisch nachgiebig ausgebildet, während deren Kern 93 elastisch nachgiebig oder starr ausgebildet sein kann. Die Kupplungselemente 65, 72 sind zumindest bereichsweise über die Klebeschichte 66 mit dem ersten Teil 89 und mit dem weiteren Teil 90 kraftschlüssig verbunden.

Die Kupplungsteile 91 können natürlich alle aus dem Stand der Technik bekannten geometrischen Formen, wie beispielsweise dreieckige Pyramiden, regelmäßige Polygone, Kegelstumpfkörper etc. ausbilden. Gegebenenfalls können diese auch fadenartig ausgebildet werden.

Hinsichtlich der unterschiedlichen Ausbildungen von Kupplungsteilen 91 der Kupplungselemente 65. 72 wird die diesbezügliche, detaillierte Offenbarung aus der WO 97/13981 A zum Gegenstand dieser Offenbarung gemacht.

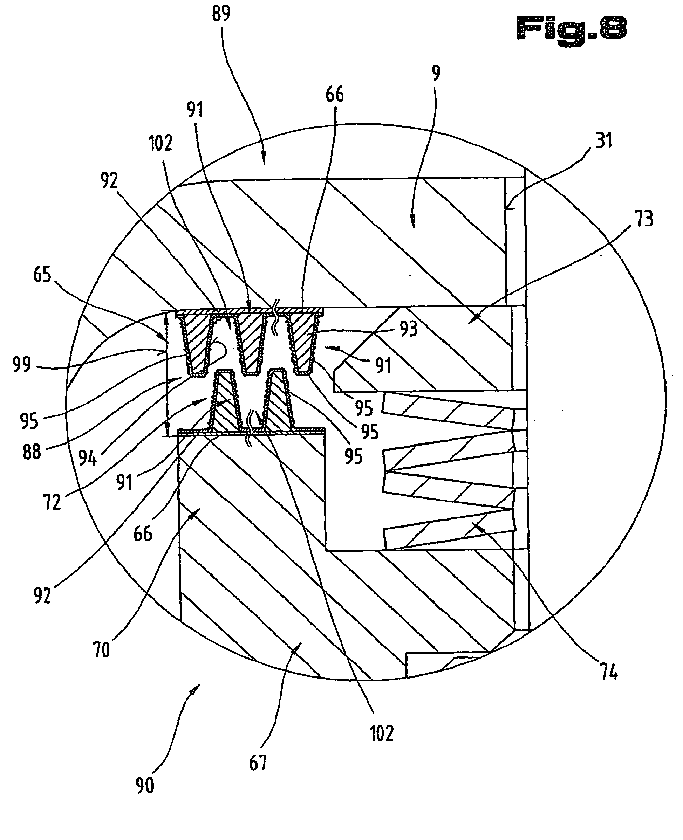

Zweckmäßig werden, wie in der Fig. 7 und Fig. 8 dargestellt, kegelstumpfförmige Kupplungsteile 91 ausgebildet, deren größere Querschnittsoberfläche dem Tragkörper 92 nähergelegen ist und die dieser gegenüberliegende kleinere Querschnittsoberfläche dem Bodenelement 67 nähergelegen ist. Eine minimale Höhe 96; 97 eines der Kupplungselemente 65; 72 ist zumindest geringfügig größer bemessen als eine maximale Höhe 97; 96 des weiteren Kupplungselementes 72; 65. Wie in diesen Fig. dargestellt, ist die minimale Höhe 96 des Kupplungselementes 65 zumindest geringfügig größer bemessen als eine maximale Höhe 97 des Kupplungselementes 72, Ein Öffnungswinkel 98 ist durch die Oberfläche der Kupplungsteile 91 begrenzt. Ein Abstand 99 zwischen den einander gegenüberliegenden Teilen 89; 90 ist in einer eingekuppelten fixierten Sperrstellung der Kupplungselemente 65, 72 zumindest geringfügig größer ausgebildet als maximale Höhen 96. 97 der Kupplungsteile 91. Dadurch erfolgt keine Berührung der flächigen Tragkörper 92 und Zerstörung der Kupplungsteile 91.

Die Kupplungselemente 65, 72 können natürlich aus allen aus dem Stand der Technik bekannten Thermoplaste-Plastomere, die Polyolefine enthalten, beispielsweise wie Polypropylen, Polyethylen und/oder Polyethylencopolymer, gebildet werden. Natürlich sind auch Mischungen von Polypropylen und/oder Polyethylen, die beispielsweise ein hohes oder niedriges Molekulargewicht aufweisen, verwendbar. Einsetzbar sind auch Thermoplaste-Plastomere, die Polyvinylchloride (PVC). Polyamide (PA), wie beispielsweise Nylon, Polystyrene, Polyester, enthalten.

Eine Höhe des oder der Rückstellelemente 74 ist größer bemessen als die Höhe 97 der Kupplungsteile 91 des weiteren Teiles 90. Es sei an dieser Stelle darauf hingewiesen, daß die Rücksiellelemente 74 natürlich durch alle aus dem Stand der Technik bekannten Spiralfedern, Telterfedern. Gummifederelementen oder elastischen Kunststoffen etc. gebildet werden können.

Die Höbe 96:97 der Kupplungsteile 91 beträgt zwischen 0.2 und 8 mm, insbesondere zwischen 0.8 und 4 mm, beispielsweise 2 mm. Ein an der größeren Querschnittsfläche des Kupplungsteiles 91 bemessener Durchmesser beträgt zwischen 0.1 mm und 4 mm, insbesondere zwischen 0.4 und 1 mm, beispielsweise 0.8 mm. Ein an der kleineren Querschnittsfläche des Kupplungsteiles 91 bemessener Durchmesser beträgt zwischen 0.05 und 3 mm, insbesondere zwischen 0.1 und 2.5 mm, beispielsweise 0.5 mm. Der durch zwischen an der Oberfläche 94 der Kupplungsteile 91 angelegte Mantellinien bemessene Öffnungswinkel 98 beträgt zwischen 5" und 40", insbesondere zwischen 10" und 30". Ein Abstand zwischen zwei oder mehrerer benachbarter Kupplungsteilen 91 entspricht in etwa den Abmessungen des in einen Aufnahmehereich vorragenden Kupplungsteiles 91.

Hinsichtlich der Festlegung dieser Abmessungen der Kupplungsteile 91 der Kupplungselemente 65, 72 wird die diesbezügliche, detaillierte Offenbarung aus der WO 97/13981 A zum Gegenstand dieser Offenbarung gemacht.

Gleichermaßen wird auf der Aufnahmefläche 53 des ersten Teiles 90, insbesondere der Halterung 7, in Längserstreckung des Durchbruches 30 zumindest ein, insbesondere mehrere parallel zu dem Durchbruch 30 verlaufende Kupplungselemente 65 angeordnet, die eine Länge aufweisen, die größer bemessen ist als die Länge 28 des Durchbruches 30.

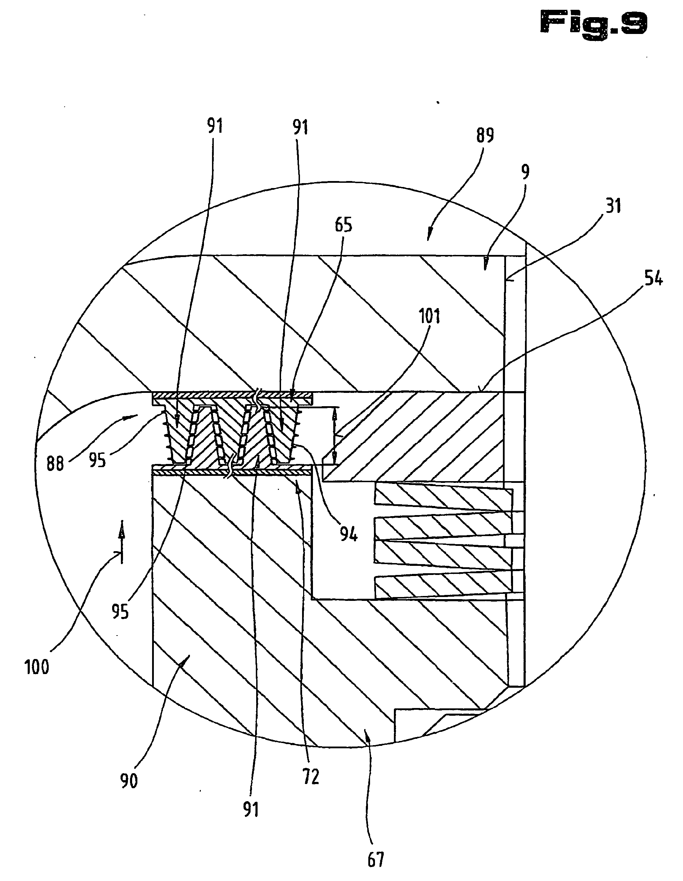

In der Fig. 9 ist eine andere Ausführungsvariante der Kupplungsvorrichtung 88 zwischen dem ersten Teil 89. insbesondere dem Tragelement 9 und/oder der Halterung 7 - wie nicht weiters dargestellt -, und dem weiteren Teil 90, insbesondere dem Bodenelement 67. gezeigt. Die in Längs- und/oder Breitenrichtung der Kupplungselemente 65. 72 voneinander distanzierten Kupplungsteile 91 weisen eine kegelstumpfförmige Querschnittsform auf, welche über den Umfang der Oberfläche 94 zumindest einen, insbesondere mehrere in Längsrichtung voneinander distanzierte und radial umlaufende Vorsprünge 95 aufweisen. Die Vorsprünge 95 weisen einen mehreckigen, insbesondere dreieckförmigen, trapezförmigen etc. Querschnitt auf. Die die Oberfläche 94 überragenden Vorsprünge 95 weisen bevorzugt eine Höhe und Weite im Bereich zwischen 5 µm und 450 µm, insbesondere zwischen 250 µm und 400 µm, auf. Beispielsweise geneigt zueinander angeordnete Seitenflächen der elastisch nachgiebigen reversiblen Vorsprünge 95 verjüngen sich in radialer Richtung mit zunehmendem Abstand. Wie aus dieser Fig. hervorgeht, sind die Kupplungselemente 65, 72 jeweils einteilig und materialeinheitlich ausgebildet. Zweckmäßig werden beide Kupplungselemente 65, 72 mit dem gleichen Material, insbesondere Thermoplaste-Polymere, ausgebildet. Natürlich besteht auch die Möglichkeit, daß eines der beiden Kupplungselemente 65, 72 aus einem eine andere Festigkeit und/oder Zähigkeit aufweisenden Kunststoff, insbesondere Thermoplaste-Polymere, gebildet ist.

Weiters sei darauf hingewiesen, daß das Tragelement 9, die Halterung 7, das Profilstück 8 ein- oder mehrteilig aus Eisenmetall oder Nichteisenmetall oder Kunststoffen, wie beispielsweise PVC oder PA. gebildet werden kann. Natürlich können diese aus metallischen oder nichtmetallischen Werkstoffen gebildeten Bauelemente zusätzlich mit einer Kunststoffschichte überzogen wurden. Die Kupplungselemente 65, 72 können natürlich mit allen aus dem Stand der Technik bekannten Verbindungsverfahren bzw. Verbindungsmittel, wie beispielsweise Schweißen, Kleben oder gegebenenfalls Nieten, Schrauben, etc. mit den jeweiligen Bauteilen verbunden werden.

Die Art der Ausbildung der miteinander in Eingriff bringbaren Kupplungsteile 91 der Kupplungselemente 65, 72, ermöglicht die Verwendung der Kupplungsvorrichtung 88 als energieabsorbierende Deformationsanordnung bzw, Sicherheitseinrichtung. Durch die Verwendung geeigneter Materialien, die insbesondere eine hohe Zähigkeit und/oder Festigkeit aufweisen, für die Kupplungsteile 91, insbesondere deren Vorsprünge 95, Kerne 93 oder der Kupplungsteile 91 selbst, kann die während der Krafteinwirkung in Längsrichtung der Lenkwelle und/oder in einer dazu querenden Richtung einwirkende Energie durch eine gegebenenfalls eintretende Deformation der Kupplungsteile 91 und/oder der Vorsprünge 95 und/oder Kerne 93 Energie absorbiert werden. Natürlich können die Kupplungsteile 91, wie in der vorhergehenden Fig. dargestellt, mit den Kernen 93, die insbesondere eine eine hohe Energie absorbierende Eigenschaft aufweisen, ausgestattet werden. Der Vorteil dieser Ausführung liegt vor allem darin, duß selbst bei Einwirkung einer unfallverursachten Kraft- bzw. Energie in Längsrichtung und/oder quer zur Längsrichtung der Lenkwelle, ein Aufsteigen der Lenkwelle bzw. eines Lenkrades in einer zur Längserstreckung der Lenkwelle senkrechten Richtung behindert bzw. weitgehend unterbunden werden kann. Dadurch kann die auf den Fahrzeuginsassen durch das Verschieben bzw. das Hochsteigen des Lenkrades ausgelöste Gefahr stark reduziert werden.

Von Vorteil ist auch die Verwendung von Kunststoff für das Tragelement 9 und/oder die Halterung 7, da die Kupplungselemente 65 unmittelbar in einem oder gegebenenfalls mehreren Herstellungsverfahren auf einen aus Kunststoff bestehenden Grundkörper aufextrudiert werden können. Dabei wird das Kupplungselement 65 auf das zweckmäßig einteilige profilartige Tragelement 9 oder der Halterung 7 im gleichen Arbeitsgang aufextrudiert. Das kalibrierte und abgekühlte formstabile Tragelement 9 oder die Halterung 7 wird in einem Oberflächenbereich, in welchem das oder die Kupplungselemente 65 aufgebracht werden soll, erhitzt und zumindest in einen teigigen Zustand versetzt, wonach das oder die Kupplungselemente 65 auf den erhitzten Bereich aufextrudiert werden.

Eine andere Ausführung besteht darin, daß das Tragelement 9 oder die Halterung 7 in jenem Bereich, in welchem das Kupplungselement 65 aufgeschweißt wird, so stark erhitzt wird, daß es im Oberflächenbereich aufschmitzt. Derartige, nach dem Prinzip der Coextrusion hergestellte Tragelemente 9 oder Halterungen 7 werden gegebenenfalls während der Extrusion oder nach der Extrusion kalibriert, sodaß diese eine hohe Fertigungsgenauigkeit aufweisen. Natürlich können diese Bauelemente gegebenenfalls auch mit einer widerstandsfähigen und chemisch beständigen Schutzschichte zumindest teilweise oder vollflächig umhüllt werden, wonach die in der Autoindustrie erforderlichen hohen Anforderungen erfüllt werden können. Ein derartiges Verfahren und die für dieses Verfahren erforderlichen Anlagen zur Herstellung eines profilartigen Bauelementes, wie Tragelement 9 oder Halterung 7, sind bereits allgemeiner Stand der Technik und nicht Gegenstand dieser Anmeldung. Es können natürlich alle aus dem Stand der Technik bekannten Verfahren und Anlagen zur Herstellung profilartiger Bauelemente verwendet werden. Als Material für die Halterung 7 bzw. des Tragelementes 9 werden bevorzugt entsprechende Polyvenylchloride (PVC) oder hochwertige Polyvenylchloride oder Polyamide verwendet. Die hochwertigen Polyvenylchloride dienen vor allem der Veredelung von Teilbereichen oder des gesamten Bauelementes, um den hohen Beanspruchungen, wie Temperatur, chemische Reaktionen etc., gerecht zu werden.

Eine andere Ausführung besteht auch darin, daß der oder die Teile 89; 90 und die Kupplungselemente 65; 72 durch einen metallischen Werkstoff gebildet sind, wobei die metallischen Kupplungsteile 91 selbst elastisch nachgiebige Vorsprünge 95 aufweisen. Dabei werden die Kupplungsteile 91 der Kupplungselemente 65; 72 in einem Präge- oder Erodierverfahren hergestellt. Gegebenenfalls kann die damit hergestellte Oberfläche 94 mit einem eine Elastizität aufweisenden Kunststoff beschichtet werden. Die Abmessungen, wie Höhe, Durchmesser. Winkel. Weite etc., der Kupplungsteile 91 entsprechen in etwa den Abmessungen der aus Kunststoff gebildeten Kupplungsteile 91. Natürlich kann auch der Kern 93 durch metallischen Werkstoff gebildet werden, über dessen Oberfläche 94 eine Kunststoffschichte angeordnet ist. Möglich ist auch die Ausbildung von metallischen Kupplungselementen 65; 72.

### Funktionsweise der Verstelleinrichtung:

Ist eine eingestellte Position zu fixieren, so wird durch die Betätigung des Betätigungshebels 52 eine Verstellrichtung - gemäß Pfeil 100 - der relativ zueinander beweglichen Verstellvorrichtungen 50. 51 in Längserstreckung des Spannelementes 33 ausgelöst und legen dabei zweckmäßig jeweils einen gleichen Verstellweg 101 zurück. Natürlich können die Federkonstanten der Rückstellelemente 74 der Verstellvorrichtungen 50. 51 derart gewählt werden, daß die Kupplungsvorrichtungen 88 der Fixiereinrichlung 4 gleichzeitig oder wechselweise bzw. erst nach erfolgtem Eingriff der ersten Kupplungsvorrichtungen 88 die weitere Kupplungsvorrichtungen 88 in Eingriff verbracht wird. Dabei kommt zumindest ein, zweckmäßig mehrere voneinander beabstandete Kupplungsteile 91 eines ersten Kupplungselementes 72 mit einem diesen in Richtung der Verstellrichtung - gemäß Pfeil 100 - gegenüberliegenden weiteren Kupplungselement 65 mit zumindest einem, insbesondere mehreren Kupplungsteilen 91 in Eingriff. Daher weist jedes Kupplungselement 65.72 zwischen zueinander beabstandeten und über den Tragkörper 92 zweckmäßig gleichmäßig verteilten Kupplungsteilen 91 eine Vielzahl von Aufnahmebereichen 102 auf. In jedem Aufnahmebereich 102 der Kupplungselemente 65, 72 ragt bzw. greift in einer eingekuppelten fixierenden Sperrstellung zumindest ein diesem Aufnahmebereich 102 gegenüberliegend zugeordneter Kupplungsteil 91 vor bzw. ein. Zweckmäßig ist zumindest ein Kupplungsteil 91 mit mehreren jeweils zueinander beabstandeten Kupplungsteilen 91 Formschlüssig in Eingriff. Dabei werden die Oberflächen 94 der in Richtung der Verstellrichtung - gemäß Pfeil 100-einander gegenüberliegenden Kupplungsteile 91 gegebenenfalls zumindest geringfügig kraftschlüssig aneinandergepreßt. Durch das Aneinanderpressen der Kupplungsteile 91 können diese nach entsprechender Festlegung der Abmessungen auch zumindest geringfügig zueinander verspannt sein. Die Kupplungselemente 65, 72 bzw. deren Kupplungsteile 91 und somit die Teile 89, 90 sind in der eingekuppelten fixierenden Sperrstellung - wie diese in der Fig. 9 anhand einer anderen Ausführung der Kupplungselemente 65, 72 gezeigt ist - in zur Aufnahmefläche 53; 54; 71 paralleler Richtung im wesentlichen spielfrei zueinander positioniert gehalten bzw. lösbar fixiert.

Durch eine Vielzahl von elastisch nachgiebigen reversiblen Vorsprüngen 95 bzw. der elastisch nachgiebigen reversiblen Oberflächen 94 der miteinander in Eingriff bringbaren Kupplungsteile 91 sind in der eingekuppelten fixierenden Sperrstellung das Tragelement 9 und die Halterung 7 gegenüber dem Spannelement 33 in ihrer Relativlage entgegen der Wirkung von dem oder den elastisch verformbaren Rückstellelementen 74 lösbar fixiert. Der Verstellweg 101 ist von den auf dem Spannelement 33. insbesondere einem Spannbolzen, gelagerten und ineinandergreifenden Betätigungselementen 55 zu überwinden. Die Verstellrichtung - gemäß Pfeil 100 - verläuft zweckmäßig parallel zu der senkrecht auf der Längsmittelachse 14 der Lenkwelle 2 ausgerichteten Mittelachse 34 des Spannelementes 33. Es sei darauf bingewiesen, daß die in den Figuren eingetragene Verstellrichtung - gemäß Pfeil 100 - einem Einkuppeln und eine in zu dieser entgegengesetzten Richtung verlaufende, nicht weiters dargestellte Verstellrichtung einem Auskuppeln entspricht.

In einer entspannten ausgekuppelten Öffnungsstellung - wie diese in den Fig. 7 und 8 anhand einer beispielhaften Ausführung der Kupplungselemente 65, 72 gezeigt ist - wird von den zweckmäßig vorgespannten Rückstellelementen 74 der Verstellvorrichtungen 50, 51 eine vorbestimmbare Anpreßkraft auf die entlang der Oberflächen 53, 54 überstreifenden Führungselemmte 73 ausgeübt, sodaß eine Bedienperson nur geringe Kräfte für eine Verstellung einer Lenkradposition aufbringen muß. Um von einer eingekuppelten fixierten Sperrstellung in eine ausgekuppelte entspannte Öffnungsstellung zu gelangen, ist der Verstellweg 101 in einer zu der Mittelachse 34 parallelen und in einer zum Tragkörper 92 der Kupplungselemente 65 des Tragelementes 9 und Halterung 7 entgegengesetzten Richtung erforderlicher Verstellweg 101 zu überwinden, um die sich miteinander in Eingriff befindlichen Kupplungsteile 91 außer Eingriff zu bringen. Während des Öffnungsvorganges mit dem Betätigungshebel 52 ist im wesentlichen nur die Kraft, insbesondere Anpreßkraft, die zwischen den miteinander in Eingriff befindlichen Kupplungsteilen 91 vorherrscht, zu überwinden, wobei das vorgespannte Rückstellelement 74 eine zum Öffnen der zueinander fixierten Bauelemente, wie Halterung 7, Profilstücke 8. Tragelemente 9, erforderliche Kraft zur Lösung derselben verringert.

Während des Fixiervorganges ist vorerst die Federkraft der Rückstellelemente 74 der Verstellvorrichtungen 50, 51 zu überwinden und nach Eingreifen der Kupplungselemente 65, 72 ist ein geringfügiger Kraftanstieg zu verzeichnen, da während der Fortbewegung in Verstellrichtung-gemäß Pfeil 100-zwischen den jeweils miteinander in Eingriff bringbaren Kupplungsteilen 91 mechanische Kräfte, insbesondere Anpreßkräfte und/oder Verformungskräfte, zusätzlich zu überwinden sind. Dadurch ist gegebenenfalls die Kraft zum Lösen um die Größenordnung der Vorspannkraft im Rückstellelement 74 kleiner, als eine Kraft zum Fixieren, bei welcher zusätzlich eine weitere Vorspannkraft zu überwinden ist. Es sei darauf hingewiesen, daß die in den Fig. eingezeichnete Verstellrichtung - gemäß Pfeil 100 - einer Zustellbewegung und eine der Zustellbewegung entgegengesetzte Verstellrichtung einer Öffnungsbewegung entspricht. Die Verstellrichtung - gemäß Pfeil 100 - zum Einkuppeln oder Auskuppeln der einrastbaren Kupplungselemente 65, 72 verläuft zumindest schräg zur Aufnahmefläche 53; 54; 71, insbesondere senkrecht zur Aufnahmefläche 53; 54; 71 oder zu einer gegebenenfalls vorhandenen Kraftübertragungsrichtung - beispielhaft gemäß Doppelpfeil 103 in Fig. 3. Dadurch ist die zwischen den Teilen 89; 90 angeordnete Kupplungsvorrichtung 88 in zur Aufnahmefläche 53: 54; 71 paralleler oder schräger Richtung zur Übertragung hoher Kräfte und/oder Momente geeignet. Zwischen den relativ zueinander verstellbaren Teilen 89,90 können natürlich eine oder mehrere Kupplungsvorrichtungen 88 hintereinander und/oder nebeneinander angeordnet werden.

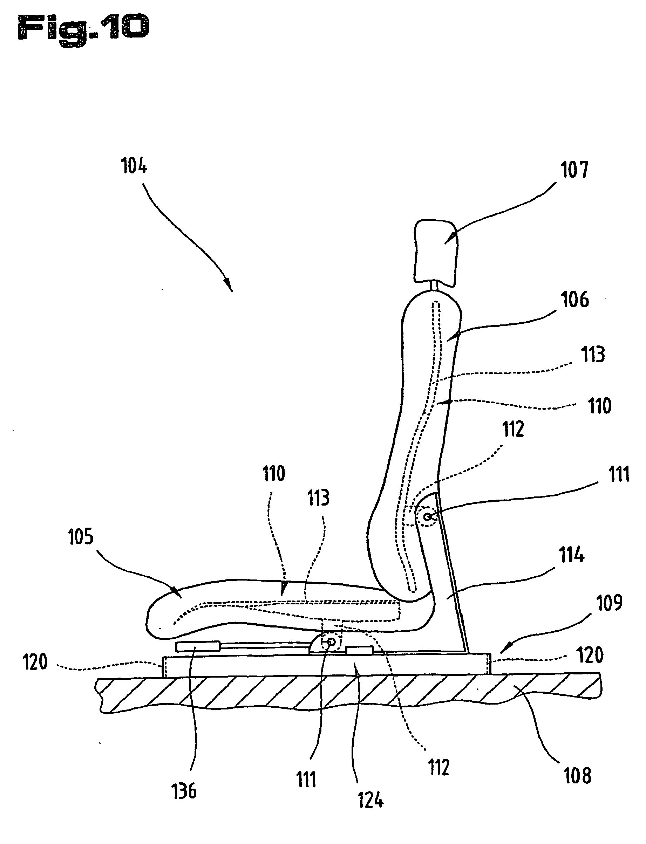

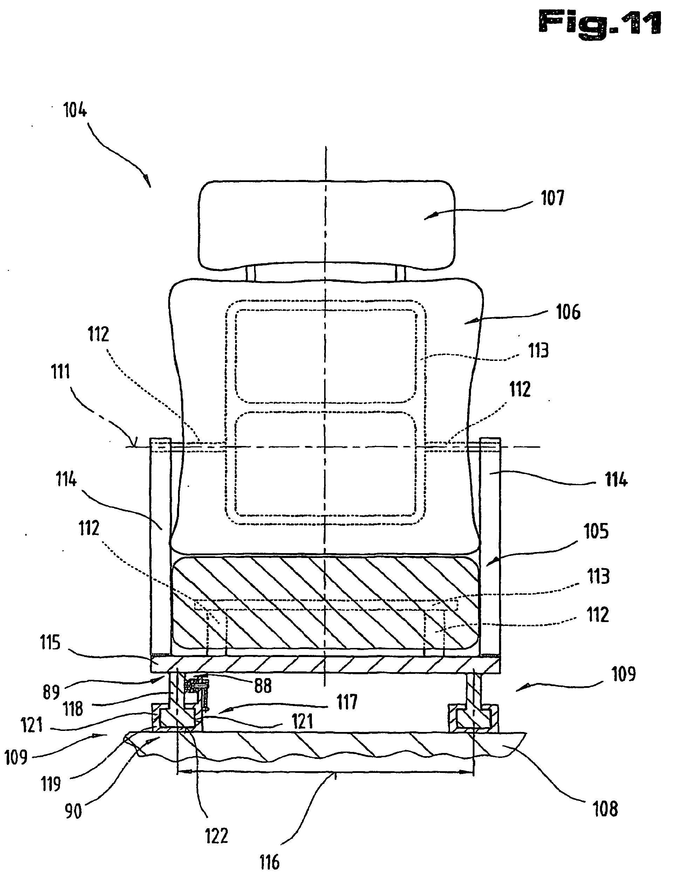

In den gemeinsam beschriebenen Fig. 10 bis 12 ist ein verschiebbarer Fahrzeugsitz 104 in unterschiedlichen Ansichten und in stark vereinfachter, schematischer Darstellung gezeigt. Der einen Sitzteil 105, einen Rückenteil 106 und einen Nackenteil 107 aufweisende Fahrzeugsitz 104 ist mit einer über eine am Karosserieteil 108. insbesondere einem Fahrzeugboden, lösbar befestigten Führungseinrichtung 109 eingriffsverbunden. Der Sitzteil 105 und der Rükkenteil 106 weisen jeder für sich zumindest eine Verstärkungseinlage 110 auf, wobei jeder der Verstärkungseinlagen 110 jeweils um eine quer zur Längsrichtung des Fahrzeuges verlaufende Schwenkachse 111 verschwenkbar gelagert ist. Demgemäß sind die Schwenkachsen 111 mit den Verstärkungseinlagen 110 des Sitz- und Rückenteiles 105, 106 über einen Schwenkteil 112 miteinander verbunden. Die Verstärkungseinlagen 110 sind beispielsweise rahmenförmig oder flächig oder skelettförmig ausgebildet, mit deren in zur Breitenrichtung des Sitzteiles 105 und Rückenteiles 106 voneinander distanzierten Verstärkungselemente 113 Schwenkteile 112 verbunden sind. Die Verstärkungseinlagen 110 können natürlich ein- oder mehrteilig aus metallischen oder nichtmetallischen Werkstoffen oder Kunststoffen, wie beispielsweise glasfaserverstärkten Kunststoffen etc., gebildet werden. In zur Breitenrichtung des Fahrzeugsitzes 104 voneinander distanziert angeordnete, in etwa L-förmig ausgebildete Stützelemente 114 nehmen zwischen diesen den Sitzteil 105 und Rückenteil 106 verschwenkbeweglich auf. Dazu sind der Sitzteil 105 und Rückenteil 106 über ein zapfenförmiges Lagerelement mit den Stützelementen 114 verschwenkbeweglich verbunden.

Zweckmäßig sind die Stützelemente 114 über in zur Längsrichtung des Fahrzeuges voneinander distanzierte und sich quer zwischen den Stützelementen 114 erstreckende Querbahnen 115 miteinander verbunden. Die Querbahnen 115 sind zum Karosserieteil 108 benachbart angeordnet. Zwischen den Querbahnen 115 und dem Karosserieteil 108 sind in Längserstreckung des Fahrzeuges und in zur Breite des Fahrzeuges voneinander distanzierten schienenförmigen Führungseinrichtungen 109 angeordnet. Die um eine Breite 116 voneinander distanzierten Führungseinrichtungen 109 weisen zwischen zumindest zwei relativ zueinander verstellbaren, eine Verstelleinrichtung 117 bildenden Teilen 89, 90 zumindest eine Kupplungsvorrichtung 88 auf. Der erste Teil 89 wird durch einen schienenförmigen Pührungsteit 118 und der weitere Teil 90 durch eine Führungsteilaufnahme 119 gebildet. Dabei ist der Führungsteil 118 und der mit dem Führungsteil 118 bewegungsfest verbundene Fahrzeugsitz 104 in Längsrichtung der Führungseinrichtungen 109 längsverschiebbar. Der Verstellweg bzw. Verschiebeweg des Fahrzeugsitzes 104 entlang der Führungseinrichtung 109 ist durch in den distalen Endbereichen der Führungseinrichtungen 109 angeordnete Anschlagelemente 120 begrenzt. Die den Führungsteil 118 in etwa C-förmig umfassende Führungsteilaufnahme 119 weist gegenüberliegende Seitenführungsbahnen 121 und senkrecht zu den Seitenführungsbahnen 121 verlaufende Höhenführungsbahnen 122 auf. Die einem beispielsweise T-förmigen Querschnitt aufweisenden Führungsteile 118 und der mit dem Führungsteil 118 bewegungsfest verbundene Fahrzeugsitz 104 ist im wesentlichen in zur Längsrichtung des Fahrzeuges und in einer dazu querenden Richtung im wesentlichen spielfrei geführt. Die Führungsteilaufnahmen 119 sind mit dem Karosserieteil 108, insbesondere mit dem Fahrzeugboden, ortsfest verbunden. Zwischen den parallel zu den Seitenführungsbahnen 121 der Führungsteilaufnuhmen 119 verlaufenden, Aufnahmeflächen 123 bildenden Längsseitenflächen und den Führungsteilaufnahmen 119 sind die Kupplungsvorrichtungen 88 angeordnet. Das erste Kupplungselement 65 ist beispielsweise über eine Klebeschichte 66 etc. mit der eine Aufnahmefläche 123 bildenden Längsseitenfläche des Führungsteiles 118 form- und/oder kraftschlüssig verbunden. Das Kupplungselement 65 erstreckt sich zumindest über einen Teil der Länge, zweckmäßig über den ganzen Teil der Länge, und über zumindest einen Teilbereich der Höhe der Führungsteile 118.

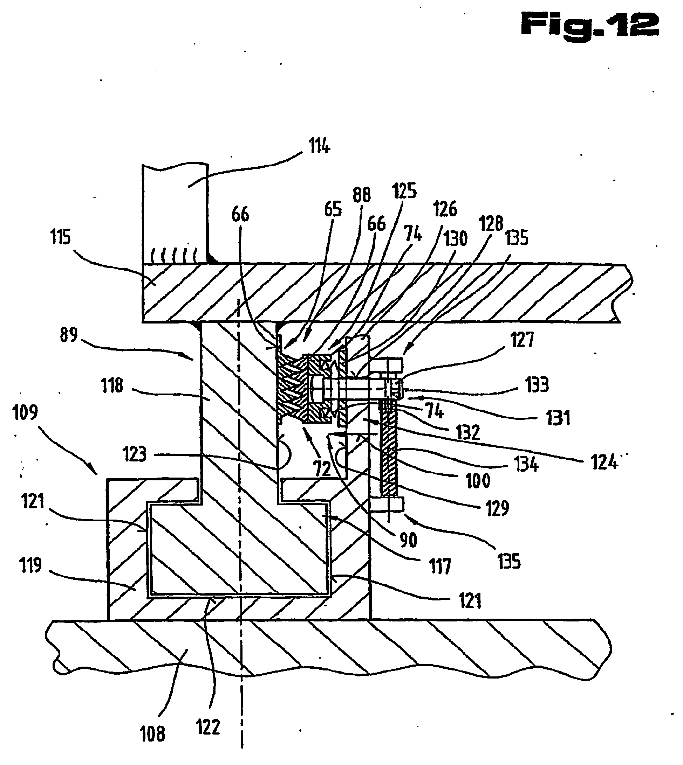

In der Fig. 12 ist die Führungseinrichtung 109 in vergrößerter und schematischer Darstellung gezeigt. Eine der Verstelleinrichtung 117 zugeordnete Fixiereinrichtung 124 weist wenigstens eine Kupplungsvorrichtung 88, welche eine weitere Ausführung der Kupplungsvorrichtung 88 darstellt, auf, die zumindest zwei miteinander in Eingriff bringbare Kupplungselemente 65 und 72 aufweist. Das Kupplungselement 72 ist beispielsweise über eine Kleberschichte 66 etc. mit einer den Teil 90 bildenden Verstellvorrichtung 125, der zumindest ein elastisch nachgiebiges Rückstellelement 74 zugeordnet ist, verbunden. Der Teil 90 ist durch einen streifenförmigen Tragteil gebildet. Das Rückstellelement 74 kann natürlich durch alle aus dem Stand der Technik bekannten, elastisch nachgiebigen Elemente, wie beispielsweise einer Schraubenfeder, Gummifederelemente etc., gebildet werden. Ein Halterungsteil 126 der Führungsteilaufnahme 119, welcher bevorzugt einstückig und materialeinheitlich mit der Führungsteilaufnahme 119 gebildet ist, weist bevorzugt einen etwa rechleckförmigen Querschnitt auf und erstreckt sich bevorzugt über einen Teilbereich der Länge und Höhe des Führungsteiles 118. Ein in Verstellrichtung-gemäß Pfeil 100 - ausgerichtetcs Spannelement 127 wird von dem Halterungsteil 126 in einer Führungsbohrung 128 längenverschiebbar geführt gehalten. Eine der Aufnahmefläche 123 des Führungsteiles 118 zugewandte, eine Aufnahmefläche 129 bildende Längsseitenfläche des Halterungsteiles 126 bildet eine Führungsbahn für ein von dem Spannelement 127 aufgenommenes streifenförmiges Führungselement 130 aus. Das oder die elastischen, selbst wieder rückstellbaren Rückstellelemente 74 sind in im Teil 90 bzw. Tragteil angeordneten Bohrungen zur Längserstreckung des Spannelementes 127 paralleler Richtung positioniert gehalten. Die Rückstellelemente 74 sind geringfügig vorgespannt. Zweckmäßig ist ein Überstand bzw. Kopf des Spannelementes 127 in einer in dem Tragteil angeordneten Vertiefung verdrehgesichert aufgenommen. Der Tragteil und das Führungselement 130 sind zweckmäßig streifenförmig ausgebildet. Ein freies Ende 131 des Spannelementes 127 ist mit einer mit einem Verbindungselement 132 durchsetzten Bohrung 133 ausgestattet.

Ein länglicher, im Querschnitt rechteckförmiger und ein- oder mehrmals abgekanteter Hebel 134 ist im Längsverlauf desselben von zwei um die Höhe des Hebels 134 voneinander distanzierten, zweckmäßig an der Führungsteilaufnahme 119 angeordneten Lagerstellen 135 verschwenkbeweglich gelagert gehalten. Die Lagerstellen 135 sind zweckmäßig form- und/oder kraftschlüssig mit der Führungsteilaufnahme 119 verbunden. Eine von den nicht weiters dargestellten bolzendurchsetzenden Bohrungen in den Lagerstellen 135 bildet mit deren aufgerichteten Mittelachse die Schwenkachse, um die der Hebel 134 verschwenkt wird, aus. An einem einem Griffteil 136 des Hebels 134 gegenüberliegenden Endbereich ist der Hebel 134 mit dem Verbindungselement 132, das die Bohrung 133 des Spannelementes 127 durchragt, gelenkig verbunden. Dazu weist der Hebel 134 in diesem Endbereich eine Sacklochbohrung auf, in die das Verbindungselement 132, insbesondere Bolzen, vorragt.

Wird der Hebel 134 nicht betätigt, so be findet sich die Fixiereinrichtung 124, insbesondere die Kupplungselemente 65 und 72 der Kupplungsvorrichtung 88, selbsttätig in Eingriff, wonach die relativ zueinander verstellbaren Teile 89, 90 in deren verstellten Relativlage gegenüber dem Karosacrieteil 108 zueinander lösbar fixiert sind. Wird der Hebel 134 in zur Führungseinrichtung 109 zugewandter Richtung betätigt, so werden die sich in Eingriff befindlichen Kupplungselemente 65, 72 entgegen der Wirkung von elastischen Rückstellelementen 74 voneinander getrennt bzw. außer Eingriff verbracht. Solange der Hebel 134 betätigt ist, ist eine Relativverstellung zwischen den relativ zueinander verstellbaren Teilen 89, insbesondere dem Fahrzeugsitz 104, zu dem ortsfest an den Karosserieteil 108 angeordneten weiteren Teil 90, insbesondere der Führungsteilaufnahme 119, in Längsrichtung des Fahrzeuges möglich.

Natürlich sind die unterschiedlichen Ausbildungen der Kupplungselemente 65, 72 von den vorhergehenden Ausführungen für diese Anwendung übernehmbar. Weiters ist die Ausbildung der Verstelleinrichtung 117, sowie die der Verstelleinrichtung 117 zugeordnete Fixiereinrichtung 124 nur eine beispielhafte Ausführung.

Weiters ist die Kupplungsvorrichtung 88 auch bei in zur Längsrichtung der Führungseinrichtung 109 radial verschwenkbaren Fahrzeugsitzen 104 einsetzbar. Weiters ist eine derartige Kupplungsvorrichtung 88 auch zur Fixierung einer Position einer Armlehne des Fahrzeugsitzes 104 einsetzbar.

Eine andere, nicht weiters dargestellte Ausführung besteht darin, die erfindungsgemäße Kupplungsvorrichtung 88 zwischen dem den ersten Teil 89 bildenden Rückenteil 106 und dem den weiteren Teil 90 bildenden Stützelement 114 anzuordnen, um eine Relativlage des Rückenteiles 106 zu dem Sitzteil 105 lösbar zu fixieren. Zweckmäßig wird dazu eines der Kupplungselemente 65 mit dem Stützelement 114 form- und/oder kraftschlüssig und das weitere Kupplungselement 72 bevorzugt mit dem im Rückenteil 106 innewohnenden Verstärkungselement 113 form- und/oder kraftschlüssig verbunden. Zumindest einem der Kupplungselemente 65; 72 ist zumindest eine Verstellvorrichtung, insbesondere ein mechanischer oder elektrischer Stellantrieb zum Einkuppeln oder Auskuppeln der einrastbaren Kupplungselemente 65, 72 zugeordnet. Dadurch ist es nunmehr auf einfache Weise möglich, eine eingestellte Neigung einer Neigungsverstelleinrichtung beispielsweise eines Fahrzeugsitzes 104, Sessel, Sitzbank etc., unter Anordnung wenigstens einer Kupplungsvorrichtung 88 lösbar zu fixieren.

Natürlich kann eine derartige Kupplungsvorrichtung 88 auch zwischen dem Nackenteil 107 und Rückenteil 106 angeordnet werden, wodurch eine eingestellte Höhe einer Höhenverstelleinrichtung für den Nackenteil 107 lösbar fixiert ist. Dabei kann beispielsweise einer der Kupplungselemente 65; 72 mit dem Verstärkungselement 113 des Rückenteiles 106 und das weitere Kupplungselement 72 mit wenigstens einem der Führungselemente des Nackenteiles 107 verbunden werden.

Eine andere, nicht weiters dargestellte Ausführung einer Anordnung der Kupplungsvorrichtung 88 zwischen zwei relativ zueinander verstellbaren Teilen 89, 90 besteht darin, duß die Kupplungsvorrichtung 88 für eine lösbare Fixierung einer eingestellten Höhe und/oder Neigung einer Höhen- und/oder Neigungsverstelleinrichtung eines Sessels, insbesondere Schreibtischsessels, eingesetzt wird.

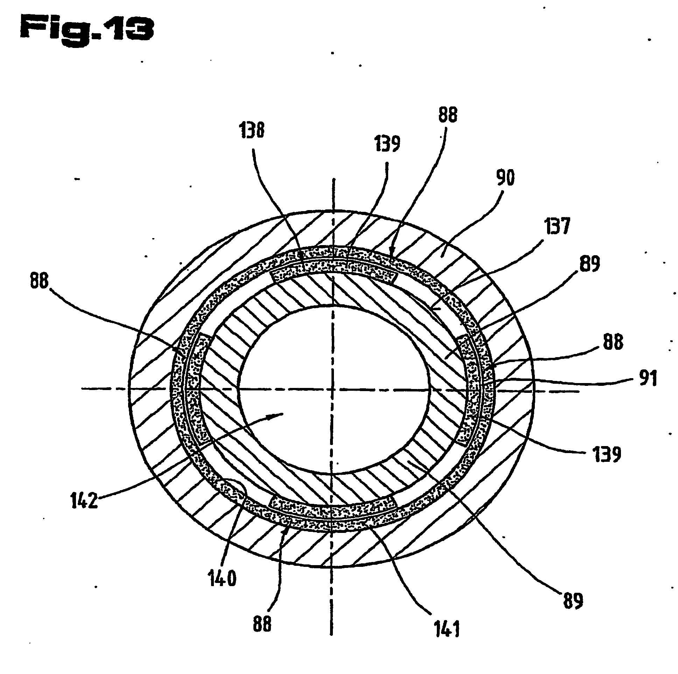

Eine andere Ausführung, wie in der Fig. 13 dargestellt ist, sicht zwei ineinander angeordnete rohrförmige Teile 89, 90 vor, bei welcher einer der beiden Teile 89, 90, insbesondere der innenliegende Teil 89, elastisch verformbar ausgebildet ist. Der luftdicht ausgeführte innenliegende Teil 89 ist gegenüber der Umgebung luftdicht abgeschlossen und weist eine vorbestimmbare Eigensteiligkeit auf. Der Teil 89 ist über eine nicht weiters dargestellte Verbindungsleitung mit einem Arbeitsmedium, insbesondere Luft, Flüssigkeit etc., leitungsverbunden und kann wechselweise druckbeaufschlagt werden.

Der innenliegende Teil 89 ist über dessen eine Aufnahmefläche 137 bildenden Außenumfang zumindest bereichsweise, in Form von Segmenten 138 mit Kupplungselementen 139 und ein dem Außenumfang 137 des innenliegenden Teiles 89 zugewandter, eine Aufnahmefläche 140 bildender Innenumfang des äußeren Teiles 90 mit einem flächigen Kupplungselement 141 versehen. Eine durch die Druckbeaufschlagung in einem Hohlraum 142 des innenliegenden Teiles 89 vonstatten gehende radiale Aufweitung desselben führt zu einem formschlüssigen Eingriff der aufeinander zugerichteten Kupplungsteile 91 der Kupplungselemente 139, 141 und fixiert so eine Relativlage zumindest zweier relativ zueinander verstellbarer Teile 89, 90.

Die Teile 89, 90 können beispielsweise durch ein Formrohr und ein flexibles Rohrelement gebildet werden.

Wird der in dem Hohlraum 142 vorherrschende Überdruck an den Umgebungsdruck angepaßt oder wird dieser gegenüber einem dem Umgebungsdruck niedrigeren Druck, insbesondere Unterdruck, abgesenkt, wird der elastisch nachgiebige Teil 89 in seinem ursprünglichen Ausgangszustand verbracht. Dabei sind die Kupplungselemente 139, 141 vollständig außer Eingriff. Der Vorteil dieser Lösung liegt vor allem darin, daß dadurch eine rasche und ausschließlich von der Zykluszeit der Druckbeaufschlagung abhängige Zykluszeit für eine Fixierung bzw. Arretierung einer vorbestimmbaren Relativlage der Teile 89, 90 zueinander ermöglicht wird. Der eine vorbestimmbare Eigensteifigkeit bzw. Elastizität aufweisende Teil 89 bildet sich bei Vorherrschen eines Umgebungsdruckes in dem Hohlraum 142 selbsttätig zurück. Durch die kleinen Abmessungen der Kupplungsteile 91 ist für eine Fixierung nur ein kleiner Verstellweg in zu den Teilen 89: 90 radialer Richtung erforderlich.

Natürlich kann bei Verwendung eines eine Elastizität aufweisenden Tragkörpers des Kupplungselementes 139 dieses sich über den gesamten Außenumfang des rohrförmigen Teiles 89 erstrecken.

Wenigstens Teilbereiche eines der rohrförmigen Teile 89, 90, insbesondere der innenliegende Teil 89, ist in zur Aufnahmefläche 139; 140 radialer Richtung elastisch verformbar ausgebildet ist. Der Teil 89 ist zur Druckbeaufschlagung des Hohlraumes 142 über eine Verbindungsleitung mit einer Verstellvorrichlung, insbesondere einem pneumatischen oder hydraulischen Stellantrieb, leitungsverbunden.

Zum Einkuppeln oder Auskuppeln der einrastbaren Kupplungselemente 139, 141 wird zumindest eines davon in radialer Richtung zur Aufnahmefläche 137, 140 wechselweise druckbeaufschlagt.

Eine andere, nicht weiters dargestellte Ausführung einer Anordnung der Kupplungsvorrichtung 88 zwischen zwei relativ zueinander verstellbaren Teile 89, 90 besteht darin, daß die Kupplungsvorrichtung 88 für eine lösbaren Fixierung einer eingestellten Höhe einer Gurthöhenverstelleinrichtung eingesetzt wird.

Wie die vorher genannten Ausführungen gezeigt haben, werden nur manuell betätigbare Verstelleinrichtungen 3: 117 und die diesen zugeordneten Fixiereinrichtungen 4; 124 dargestellt. Natürlich sind derartige Verstellvorrichtungen 50; 51; 125 der Fixiereinrichtungen 4; 124 insbesondere die Kupplungsvorrichtung 88. die zwischen zwei relativ zueinander verstellbaren Teilen 89, 90 angeordnet sind, auch über elektrische, pneumatische, hydraulische Stellantriebe betätigbar. Die Stellantriebe können durch mit den Kupplungselementen 65; 72 wirkungsverbundene flächige Kulissenbahnen, Stellelemente etc. gebildet werden, die nach Druck-, Kraft-. Momenten-, Strombeaufschlagung zumindest eines der Kupplungselemente 72 mit den weiteren Kupplungselementen 65 in Eingriff verbringt. Derartige, mit wenigstens einer Steuereinrichtung und wenigstens einer Betätigungseinrichtung ansteuerbaren und regelburen Stellantriebe für die Fixiereinrichtung 4; 124 und Verstelleinrichtung 3; 117 sind bereits allgemeiner Stand der Technik und nicht Gegenstand dieser Anmeldung.

Eine andere, nicht weiters dargestellte Ausführung besteht darin, daß nach Erfassen eines Gewichles eines Fahrzeuginsassen gegebenenfalls zumindest eine weitere Fixiereinrichtung 4, insbesondere eine weitere Verstellvorriehlung 50; 51, zwischen dum Betätigungshebel 52 und der Halterung 7 und zwischen der Lenkwelle 2 und dem Tragelement 9 in Richtung der Lenkwelle 2 scriell oder quer zur Lenkwelle 2 parallel hinzugeschaltet wird. Natürlich ist dies auch auf alle anderen Ausführungen übertragbar. Dies bringt den Vorteil mit sich, daß dadurch insbesondere bei einer Kraft- bzw. Energieeinwirkung in Längsrichtung der Lenkwelle 2 und/oder in einer dazu querenden Richtung die Anpreßkraft bzw. die Kraft zum Fixieren der Lenkwelle 2 gegenüber der Halterung 7 vergrößert wird und dadurch ein Verschieben der Lenkwelle 2 in Längsrichtung derselben erschwert bzw. unterbunden wird, wonach ein höherer Anteil an Energie absorbiert werden kann.

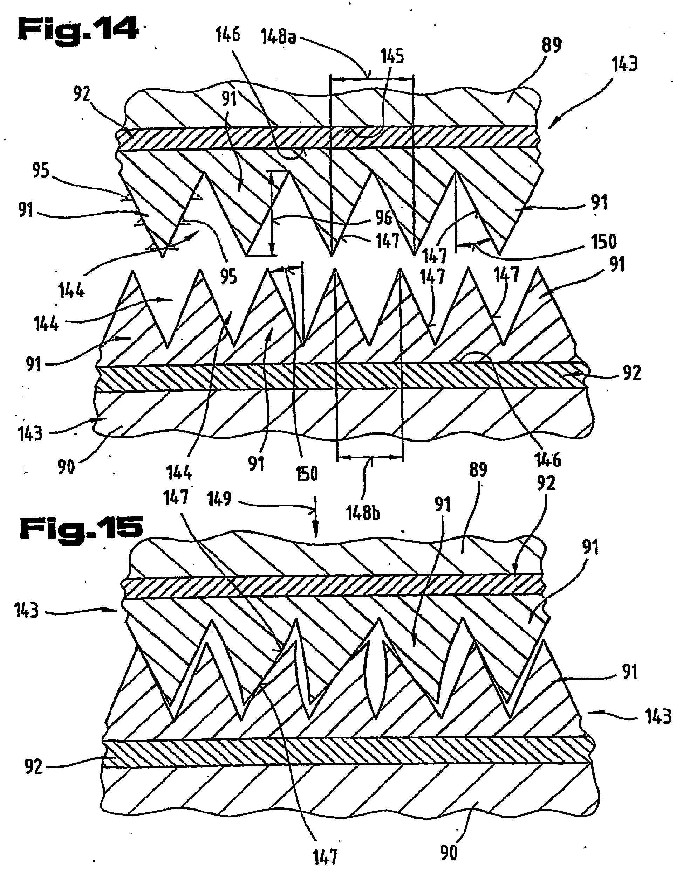

In den gemeinsam beschriebenen Fig. 14 und 15 ist eine andere Ausführung von Kupplungselementen 143 dargestellt, die sich, wie in der Fig. 14 dargestellt, außer Eingriff befinden oder, wie in der Fig. 15 dargestellt, miteinander in Eingriff befinden. Die miteinander in Eingriff bringbaren Kupplungselemente 143 sind ein- oder mehrteilig bzw. ein- oder mehrschichtig aufgebaut, deren Kupplungsteile 91 sind zumindest geringfügig elastisch nachgiebig, reversibel ausgebildet und zwischen diesen sind Aufnahmebereiche 144 für zumindest einen vom weiteren Kupplungselement 143 ausgebildeten Kupplungsteil 91 vorgesehen. Wie in dieser bevorzugten Ausführungsvariante dargestellt, weisen die Kupplungsteile 91 einen pyramidenförmigen oder kegeligen etc. Querschnitt auf. Die eine Elastizität aufweisenden und über eine Oberfläciie 145 bevorzugt gleichmäßig verteilt angeordneten Kupplungsteile 91 der Kupplungselemente 143 sind in drei Raumrichtungen elastisch verformbar reversibel ausgebildet und werden bei Druckbeaufschlagung zumindest eines Kupplungselementes 143 in Richtung des Aufnahmebereiches 144 des weiteren Kupplungselementes 143 verdrängt und/oder in sich eingedrückt bzw. elastisch deformiert. Die Oberfläche 145 bildet eine der Aufnahmefläche 53; 54; 71; 123; 129; 137; 140 - wie in dieser Fig. nicht dargestellt - zugeordnete Verbindungsfläche zur positionierten Aufnahme des Kupplungselementes 143 aus. Natürlich kann die Aufnahmefläche 53; 54; 71; 123; 129; 137; 140 in den Teil 89; 90 vertieft angeordnet werden, sodaß die Kupplungsteile 91 des weiteren Kupplungselementes 143 in diese Vertiefung vorragen, um in Eingriff zu gelangen.

Die Kupplungselemente 143 sind bevorzugt über die Kleberschichte 66 - nicht dargestellt - jeweils mit den Teilen 89, 90 verbunden. Wie in dieser beispielhaften Ausführung gezeigt, ist das Kupplungselement 143 mit einem sich zwischen den Kupplungsteilen 91 und der Oberfläche 145 befindlichen flächigen Tragkörper 92 ausgestattet, auf welchem an einer der eine Verbindungsfläche bildenden Oberfläche 145 abgewandten Tragkörperoberfläche 146 die Kupplungsteile 91 bevorzugt gleichmäßig verteilt angeordnet sind. Der mit den Kupplungsteilen 91 das einstückige Kupplungselement 143 bildende Tragkörper kann die gleichen oder zu den Kupplungsteilen 91 unterschiedliche Eigenschaften in bezug auf Zähigkeit. Festigkeit etc. aufweisen. Die über die Tragkörperoberfläche 146 des Tragkörpers 92 bevorzugt gleichmäßig verteilten Kupplungsteile 91 sind durch ausgehend von der Tragkörperoberfläche 146 in abgewandter Richtung aufeinander zulaufende Stützflächen 147 bildende Seitenflanken begrenzt. Die Kupplungsteile 91 können natürlich mit den die Stützfläche 147 überragenden, wulstförmigen Vorsprüngen 95 versehen werden - wie in strichlierten Linien dargestellt -, die in Richtung der Höhe 96 der Kupplungsteile 91 zumindest geringfügig voneinander beabstandet angeordnet sind. Selbstverständlich besteht auch die Möglichkeit, daß im Bereich einer Profiloberfläche bzw. der diese bildenden Stützflächen 147 der Kupplungsteile 91 eine diese vollflächig überdeckende Schichte, wie nicht weiters dargestellt, angeordnet ist, die elastisch nachgiebig reversibel ausgebildet ist. Diese Schichte kann durch einen zu den Kupplungsteilen 91 unterschiedliche Eigenschaften aufweisenden Kunststoff gebildet werden. Zweckmäßig ist die Schichte durch ein eine höhere Elastizität aufweisenden Material, insbesondere Kunststoff, gebildet. Die Schichte an sich weist zweckmäßig eine wellig ausgebildete Eingriffs- bzw. Profiloberfläche auf.

Die einander gegenüberliegenden Kupplungselemente 143 können, wie aus der Fig. 14 zu ersehen ist, unterschiedliche Teilungsabstände 148a, 148b zwischen zwei unmittelbar hintereinander angeordneten Kupplungsteilen 91 eines Kupplungselementes 143 aufweisen, sodaß die einander gegenüberliegenden und miteinander in Eingriff bringbaren Teilbereiche der Kupplungselemente 143; insbesondere die Kupplungsteile 91, in Folge einer Druck- bzw. Kraftbeaufschlagung-gemäß Pfeil 149 - durch zumindest eines der Teile 89; 90 elastisch verformt werden, wie dies aus der Fig. 15 zu ersehen ist. Die von Verstellvorrichtungen 50, 51 bedarfsweise auszuübende Druck - bzw. Kraftbeaufschlagung - gemäß Pfeil 149 - kann durch alle aus dem Stand der Technik bekannte elektrische, hydraulische, pneumatische, hybride Stellantriebe erfolgen.

Natürlich besteht auch die Möglichkeit, daß die miteinander in Eingriff bringbaren Kupplungselemente 143 die gleiche Teilung 148a, 148b und eine unterschiedliche Kupplungsteileanzahl innerhalb derselben Lange aufweisen. Durch die Verschiebung bzw. Verlagerung zumindest eines Aufnahmebereiches gegenüber zumindest einem Kupplungsteil 91 wird ein in zur Längs- und/oder Breitenrichtung der flächigen, miteinander in Eingriff bringbaren Kupplungselentente 143 erhöhter Form- und/oder Kruftschluß zwischen den Kupplungselementen 143 bewirkt. Ist einer der Teilungsabstände 148 der miteinander in Eingriff bringbaren Kupplungselentente 143 größer oder kleiner bemessen, werden gegebenenfalls in den Aufnahmebereich 144 gleichzeitig mehrere Kupplungsteile 91 des gegenüberliegenden Kupplungselementes 143 gezwängt, indem die Stützflächen 147 während des Ineinandergreifens der Kupplungsteile 91 der miteinander in Eingriff bringbaren Kupplungselemente 143 aneinander gleiten. Um das Vordringen mehrerer Kupplungsteile 91 eines Kupplungselementes 143 in einen Aufnahmebereich 144 des weiteren Kupplungselementes 143 zu begünstigen, können die Flankenwinkel 150 eine unterschiedliche Neigung aufweisen. Selbstverständlich ist es aber auch möglich, daß die Flankenwinkel 150 der Kupplungsteile 91 der gegenüberliegenden Kupplungselemente 143 eine gleiche Neigung aufweisen und in Folge der Druck- bzw. Kraftbeaufschlagung - gemäß Pfeil 149 - mehrere durch den Aufnahmebereich 144 voneinander getrennte Kupplungsteile 91 in den gegenüberliegenden Aufnahmebereich 144 des weiteren Kupplungselementes 143 vorragen und durch die fortwährende Druckbeaufschlagung - gemäß Pfeil 149 - und die geneigten Stützflächen 147 die in den Aufnahmebereich 144 vorragenden Kupplungslcile 91 elastisch reversibel verformt werden.

Die in einer Eingriffsstellung in den Aufnahmebereich 144 des gegenüberliegenden Kupplungselementes 143 vorragenden Kupplungsteile 91 überdecken sich zumindest bereichsweise mit den Kupplungsteilen 91 des gegenüberliegenden Kupplungselementes 143, wodurch die miteinander in Eingriff bringbaren Kupplungselemente 143 zumindest bereichsweise aufeinanderabgestütxt bzw. gegeneinander geringfügig verspannt und in deren Relativlage zueinander positioniert gehalten sind. Die Aufnahmebereiche 144 bilden dabei einen Schwüchungsbereich aus.

Die in den Fig. 14 und 15 gezeigten Ausführungen sind natürlich auf alle in den vorgenannten Fig. 1 bis 13 beschriebenen Ausführungen übertragbar, wobei zumindest zwei relativ zueinander verstellbare Teile 89, 90 in einem Kraftfahrzeug jeweils mit einem Kupplungselement 143 versehen sind und diese miteinander zum Einkuppeln oder Auskuppeln zumindest schräg, insbesondere senkrecht, zur Aufnahmefläche relativ verstellbar ausgebildet sind. Dazu ist zumindest einem der Teile 89, 90 eine Verstellvorrichtung 50; 51; 125, wie diese in den oben genannten Fig. beschrieben ist, zugeordnet. Natürlich können auch beide Teile 89, 90 relativ zueinander verstellbar ausgebildet sein.

Werden die Kupplungselemente 143 in eine entspannte ausgekuppelte Öffnungsstellung verbracht, verformen sich die elastisch verformten Kupplungsteile 91 selbsttätig zurück. Durch das zumindest bereichsweise Vorspannen der Kupplungsteile 91 der gegenüberliegenden, miteinander in Eingriff bringbaren Kupplungselemente 143 wird im wesentlichen eine form- und/oder kraftschlüssige, bedarfsweise lösbare Verbindung zwischen den Kupplungselementen 143 bzw. den in ihrer Relativlage zueinander positionierenden Teile 89, 90 erreicht. Die die Aufnahmefläche zumindest geringfügig überragenden Kupplungsteile 91 des Kupplungselementes 143 sind auf einem Tragkörper 92 oder unmittelbar auf dieser, beispielsweise durch Coextrusion etc., angeordnet.

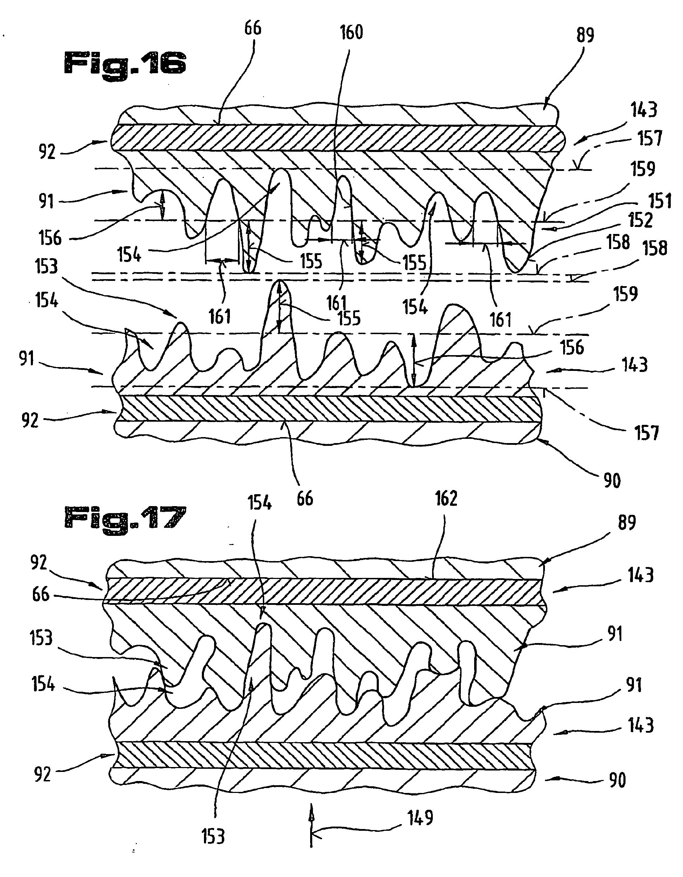

In den gemeinsam beschriebenen Fig. 16 und 17 ist eine weitere Ausführungsvariante der miteinander in Eingriff bringbaren Kupplungselemente 143 gezeigt, wobei die in Fig. 16 dargestellten Kupplungselemente 143 sich außer Eingriff und die in der Fig. 17 dargestellten Kupplungselemente 143 in Eingriff befinden. Die Kupplungselemente 143 sind ebenfalls flächig ausgebildet und können ein- oder mehrteilig bzw. ein- oder mehrschichtig ausgebildet werden. Wie in den Fig. dargestellt, weisen die Kupplungselemente 143 einen flächigen Tragkörper 92 auf, der unmittelbar über die Kleberschichte 66 mit dem Teil 89, 90 verbunden ist. Der Tragkörper 92 ist einstückig angeformt und kann die gleichen oder unterschiedlichen Eigenschaften gegenüber dem Kupplungsteil 91 aufweisen. In der vorliegenden Ausführung ist das Kupplungselement 143 durch zumindest ein ein Oberflächenprofil 151 aufweisendes Küpplungsteil 91 gebildet, das eine regelmäßige oder unregelmäßige wiederkehrende Welligkeit 152 aufweist. Das Oberflächenprofil 151 ist durch mehrere nebeneinander angeordnete, regelmäßig oder unregelmäßig verteilte Profilspitzen 153 und Profiltälern 154 gebildet, wobei eine maximale Höhe 155 und eine maximale Tiefe 156 durch ein Grundprofil 157 und ein Bezugsprofil 158 begrenzt sind. Zwischen dem Grund- und dem Bezugsprofil 157, 158 verlaufen die eine gleiche oder kleinere Höhe 155 oder Tiefe 156 aufweisenden Profilspitzen 153 und Profiltäler 154. Es sei darauf hingewiesen, daß die Höhe 155 und Tiefe 156 jeweils zwischen einem zwischen dem Grund- und Bezugsprofil 157, 158 liegenden mittleren Profil 159 bemessen ist. Eine an dem mittleren Profil 159 an einer Profiloberfläche 160 und zwischen zwei zueinander benachbarten Kupplungsteilen 91 bemessene Öffnungsweite 161 eines Profiltales 154 kann zu den weiteren Öffnungsweiten 161 der weiteren Profiltäler 154 gleich oder unterschiedlich bemessen werden.

Wie aus der Fig. 16 weiters ersichtlich, ist das weitere mit dem ersten Kupplungselement 143 bedarfsweise lösbar einkuppelbare Kupplungselement 143 mit dem ein Oberflächenprofil 151 aufweisenden Kupplungsteil 91 versehen, das durch mehrere hintereinander angeordnete Profilspitzen 153 und Profilläler 154 gebildet ist. Diese Profilspitzen 153 und Profiltäler 154 können untereinander und/oder gegenüber den Profilspitzen 153 und Profiltälern 154 des gegenüberliegenden Kupplungselementes 143 gleiche oder unterschiedliche Höhen 155 und Tiefen 156 aufweisen. Natürlich kann auch eine maximale Tiefe 156 zumindest eines Profiltales 154 des ersten Kupplungselementes 143 kleiner oder gleich sowie größer als die Tiefe 156 des Profiltales 154 des weiteren Kupplungselementes 143 ausgebildet werden. Gleiches gilt auch für die maximale Höhe 155 der Profilspitze 153 des ersten und weiteren Kupplungselementes 143.

Wie in der Fig. 17 besser zu ersehen ist, sind die Profilspitzen 153 und Profiltäler 154 der miteinander in Eingriff bringbaren Kupplungselemente 143 elastisch nachgiebig reversibel ausgebildet, sodaß auch bei Aufeinandertreffen bzw. Aneinanderstoßen zumindest zweier Profilspitzen 153 der beiden Kupplungselemente 143 diese derart elastisch verformt werden, daß durch das Aufeinandertreffen der beiden Profilspitzen 153 eine Materialverdrängung in das oder die zu der Profilspitze 153 benachbarte Profiltal 154 oder benachbarten Profiltäler 154 erfolgt und nur bereichsweise Profilspitzen 153 in etwa korrespondierende Profiltäler 154 aufgenommen werden. Wie bereits zuvor beschrieben, ist zumindest einer der Teile 89; 90 zum Einkuppeln der Kupplungselemente 143 mit einer Kraft beaufschlagt - gemäß Pfeil 149 - die zweckmäßig über die gesamte Dauer der eingekuppelten Eingriffstellung der Kupplungselemente 143 wirksam ist. Durch die elastische Verformung der die Kupplungsteile 91 bildenden Profilspitzen 153 und/oder Profiltäler 154 und unter Einwirkung der Kraftbeaufschlagung - gemäß Pfeil 149 - wird ein erhöhter Anpreßdruck und somit eine Reibkraft zwischen den Kupplungselementen 143 erreicht, sodaß die miteinander einkuppelbaren und einrastbaren Kupplungselemente 143 eine Kraftübertragung in zu einer Aufnahmefläche 162 der Teile 89, 90 parallelen Richtung möglich ist. Ein weiterer Vorteil dieser Ausführung ist vor allem auch darin zu sehen, daß in einer eingekuppelten Eingriffstellung auch dann, wenn eine maximale Höhe 155 einer Profilspitze 153 größer bemessen ist als eine minimale Tiefe 156 eines Profiltales 154, einerseits keine Zerstörung der Kupplungselemente 143 erfolgt, da eine elastische Verformung zumindest einer Profilspitze 153 und/oder zumindest eines Profiltales 154 erfolgt, und andererseits trotzdem eine zuverlässige Fixierung einer Relativlage zwischen zwei relativ zueinander verstellbaren Teilen 89, 90 möglich ist. Natürlich besteht auch die Möglichkeit, daß die Eigenschaften der beiden miteinander in Eingriff bringbaren Kupplungselemente 143 unterschiedlich ausgebildet sind.

Zum Auskuppeln der einrastbaren Kupplungselemente 143 werden diese entgegen der Wirkung der Druckbeaufschlagung - gemäß Pfeil 149 - zueinander in entgegengesetzter Richtung bewegt, wonach die elastisch nachgiebigen reversiblen Kupplungselemente 143 bzw. deren Kupplungsteile 91 in deren ursprüngliche Ausgangslage selbsttätig rückgebildet werden. Dadurch kommen die Profilspitzen 153 und Profiltäler 154 der miteinander in Eingriff bringbaren Kupplungselemente 143 nur anteilsweise in eine ineinandergreifende Eingriffstellung. Besonders vorteilhaft dabei ist, daß es nunmehr möglich ist, daß bei einem Anteil der miteinander formschlüssig in Eingriff bringbaren Profilspitzen und Profiltäler 153. 154 von etwa 30 bis 100 %, insbesondere zwischen 50 und 90 %, beispielsweise 70 %, ausreichend ist, um die in zur Aufnahmefläche 162 paralleler und/oder schräger Richtung verlaufenden vorbestimmbaren Kräfte übertragen zu können. Der restliche form- und kraftschfüssig ineinandergreifende Anteil, daher 70 bis 0 %, insbesondere zwischen 50% und 10 %, beispielsweise 30 %, der Profilspitzen und Profiltäler 153, 154 werden bereichsweise elastisch verformt. Es sei darauf hingewiesen, daß der Anteil, bemessen in Prozent, in bezug auf die über die Tragkörperoberfläche 146 oder der Oberfläche 145 verteilten Kupplungsteile 91 bzw. Profilspitzen 153 und Profiltäler 154 ausgelegt ist. Beispielsweise ist es auch möglich, daß eines der Kupplungselemente 141; 143 eine andere Eigenschaft, beispielsweise in bezug auf Festigkeit. Zähigkeit. Elastizitätsmodul, etc., aufweist, was eine kraftniedrige Einformung zumindest einer Profilspitze 153 des ersten Kupplungselementes 141 in zumindest eine Profilspitze 153 des weiteren Kupplungselementes 143 ermöglicht. Dadurch können auch unterschiedliche Anforderungen, wie sichere Fixierung gegen Loslösen der eingekuppelten Kupplungselemente 141, 143, erfüllt werden.

Eine andere nicht weiters dargestellte Ausführung besteht darin, das die Kupplungsteile 91 fadenartig ausgebildet sind und durch das miteinander in Eingriff Bringen der druckkraftbeaufschlagten Kupplungselemente 65, 72; 141, 143 diese zumindest bereichsweise umgebogen und/oder überdeckt und/oder umschlungen werden. Durch das unmittelbare Aneinanderliegen der etwa zylindrischen Oberflächen der Kupplungsteile 91 der Kupplungselemente 65, 72; 141, 143 wird ein erhöhter Reibschluß zwischen diesen erreicht, was die Übertragung hoher, im wesentlichen in zur Aufnahmefläche 53; 54; 71; 123; 129, 137, 140; 162 paralleler Richtung verlaufende Kräfte ermöglicht. Diese fadenartigen Kupplungsteile 91 sind zweckmäßig auf dem ebenflächigen Tragkörper 92 angeordnet, der über die Kleberschichte 66 oder dem form- und/oder kraftschlüssigen Verbindungselement mit dem Teil 89, 90 verbunden ist. Die Kupplungsteile 91 sind durch einen Aufnahmebereich getrennt voneinander angeordnet.

Durch die oben angeführten Ausbildungen, wie in den Fig. 1 bis 17 beschrieben, können vor allem hohe Schubkräfte, die im wesentlichen in zur Aufnahmefläche 53; 54; 71; 123; 129, 137, 140; 162 paralleler Richtung verlaufen, ohne eine Verlagerung der Teile 89, 90 zu bewirken, übertragen werden. Die Schubkräfte können in etwa zwischen 1 % und 30 %, beispielsweise 5 % und 20 %, größer sein als eine zum Einrasten erforderliche Druckkraft für die Arretierung der Teile 89. 90.

Abschließend sei noch darauf hingewiesen, daß die Kupplungselemente 65, 72, 141, 143 der Kupplungsvorrichtung 88 vereinfacht und in stark vergrößerter Darstellung und aus Gründen der besseren Übersicht in den Figuren nur wenige Kupplungsteile 91 dargestellt sind. Vielmehr sind die Kupplungselemente 65, 72 mit einer Vielzahl von Kupplungsteilen 91 ausgestattet. Natürlich können zwischen den Teilen 89 und 90 mehrere Kupplungsvorrichtungen 88 hintereinander und/oder nebeneinander, daher über die Aufnahmefläche 53, 54, 71, 123, 129, 162 verteilt, angeordnet werden. Zudem sind die in den Fig. 14 bis 17 dargelegten Ausführungen und Verwendungen auch auf die in den Fig. 1 bis 13 gezeigten Ausführungen und Verwendungen sinngemäß übertragbar.

Der Ordnung halber sei abschließend darauf hingewiesen, daß zum besseren Verständnis der Kupplungsvorrichtung 88 und der Kupplungselemente 65, 72, 139, 141, 143 diese bzw. deren Bestandteile teilweise unmaßstäblich und/oder stark vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2; 3, 4, 5, 6; 7, 8, 9; 10, 11, 12; 13; 14, 15; 16, 17 gezeigten Ausführungen und Maßnahmen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Lenkwellenverstelleinheit
- 2: Lenkwelle
- 3: Verstelleinrichtung
- 4: Fixiereinrichtung
- 5: Befestigungsmittel

- 6: Karosserie
- 7: Halterung
- 8: Profilstück
- 9: Tragelement
- 10: Basis

- 11: Schenkel
- 12: Profilschenkel
- 13: Führungsvorrichtung
- 14: Längsmittelachse
- 15: Doppelpfeil

- 16: Doppelpfeil
- 17: Endbereich
- 18: Endbereich
- 19: Lager
- 20: Lager

- 21: Länge
- 22: Länge
- 23: Länge
- 24: Schwenkachse
- 25: Innenseite

- 26: Führungselement
- 27: Führungsbahnanordnung
- 28: Länge
- 29: Breite
- 30: Durchbruch

- 31: Längsschlitz
- 32: Bohrung
- 33: Spannelement
- 34: Mittelachse
- 35: Teil

- 36: Teil
- 37: Höhe
- 38: Wandstärke
- 39: Höhe
- 40: Wandstärke

- 41: Basis
- 42: Breitenmaß
- 43: Verbindungsbereich
- 44: Seitenschenkel
- 45: Seitenschenkel

- 46: Basis
- 47: Übergangsbereich
- 48: Führungsbahn
- 49: Führungsbahn
- 50: Verstellvorrichtung

- 51: Verstellvorrichtung
- 52: Betätigungshebel
- 53: Aufnahmefläche
- 54: Aufnahmefläche
- 55: Betätigungselement

- 56: Kunststoffscheibe
- 57: Blechscheibe
- 58: Befestigungsanordnung
- 59: Lageraufnahmestelle
- 60: Lageraufnahmestelle

- 61: Länge
- 62: Anschlagelement
- 63: Dämpfungsorgan
- 64: Verstellweg
- 65: Kupplungselement

- 66: Kleberschichte
- 67: Bodenelement
- 68: Längsseitenbereich
- 69: Grundfläche
- 70: Längssteg

- 71: Aufnahmefläche
- 72: Kupplungselement
- 73: Führungselement
- 74: Rückstellelement
- 75: Breite

- 76: Längsseitenfläche
- 77: Länge
- 78: Querseitenfläche
- 79: Unterseite
- 80: Längsmittelachse

- 81: Quermittelachse
- 82: Bohrung
- 83: Endbereich
- 84: Führungs- und/oder Anschlagelement
- 85: Anschlagfläche

- 86: Kupplungselementbreite
- 87: Kupplungselementbreite
- 88: Kupplungsvorrichtung
- 89: Teil
- 90: Teil

- 91: Kupplungsteil
- 92: Tragkörper
- 93: Kern
- 94: Oberfläche
- 95: Vorsprung

- 96: Höhe
- 97: Höhe
- 98: Öffnungswinkel
- 99: Abstand
- 100: Pfeil

- 101: Verstellweg
- 102: Aufnahmebereich
- 103: Doppelpfeil
- 104: Fahrzeugsitz
- 105: Sitzteil

- 106: Rückenteil
- 107: Nackenteil
- 108: Karosserieteil
- 109: Führungseinrichtung
- 110: Verstärkungseinlage

- 111: Schwenkachse
- 112: Schwenkteil
- 113: Verstärkungselement
- 114: Stützelement
- 115: Querbahn

- 116: Breite
- 117: Verstelleinrichtung
- 118: Führungsteil
- 119: Führungsteilaufnahme
- 120: Anschlagelement

- 121: Seitenführungsbahn
- 122: Höhenführungsbahn
- 123: Aufnahmefläche
- 124: Fixiereinrichtung
- 125: Verstellvorrichtung

- 126: Halterungsteil
- 127: Spannelement
- 128: Führungsbohrung
- 129: Aufnahmefläche
- 130: Führungselement

- 131: Ende
- 132: Verbindungselement
- 133: Bohrung
- 134: Hebel
- 135: Lagerstelle

- 136: Griffteil
- 137: Aufnahmefläche
- 138: Segment
- 139: Kupplungselement
- 140: Aufnahmefläche

- 141: Kupplungselement
- 142: Hohlraum
- 143: Kupplungselement
- 144: Aufnahmebereich
- 145: Oberfläche

- 146: Tragkörperoberfläche
- 147: Stützfläche
- 148a: Teilungsabstand
- 148b: Teilungsabstand
- 149: Pfeil
- 150: Flankenwinkel

- 151: Oberflächenprofil
- 152: Welligkeit
- 153: Profilspitze
- 154: Profiltal
- 155: Höhe

- 156: Tiefe
- 157: Grundprofil
- 158: Bezugsprofil
- 159: mittleres Profil
- 260: Profiloberfläche

- 261: Öffnungsweite
- 262: Aufnahmefläche

## Patentansprüche

1. Kupplungsvorrichtung (88), für zumindest zwei relativ zueinander verstellbare Teile (89, 90), von welchen jeder mit wenigstens einem Kupplungselement (65, 72; 139, 141; 143) versehen ist und die Kupplungselemente (65, 72; 139, 141; 143) eine Aufnahmefläche (53, 54, 71; 123; 129; 137, 140; 162) der Teile (89, 90) zumindest geringfügig überragende Kupplungsteile (91) aufweisen und über eine Verstellvorrichtung (50; 51; 125) zumindest schräg, insbesondere senkrecht, zur Aufnahmefläche (53, 54, 71; 123; 129; 137, 140; 162) zwischen einer ausgekuppelten entspannten Öffnungsstellung und einer eingekuppelten fixierenden Sperrstellung verstellbar angeordnet sind, wobei Eingriffsflächen der Kupplungsteile (91) der Kupplungselemente (65, 72; 139, 141; 143) in der Sperrstellung mit einer voreinstellbaren Anpreßkraft gegeneinander abgestützt sind, **dadurch gekennzeichnet, daß** die Eingriffsflächen ein Profil aufweisen und daß die Kupplungsteile (91) der Kupplungselemente (65, 72; 139, 141; 143) aus einem elastisch nachgiebig reversiblen Kunststoff, beispielsweise Thermoplast, gebildet und in der eingekuppelten fixierten Sperrstellung der Kupplungselemente (65, 72; 139, 141; 143) unter Einwirkung der Anpreßkraft elastisch verformbar ausgebildet sind.

2. Kupplungsvorrichtung nach Anspruch 1, **dadurch gekennzeichnet, daß** zumindest eines der Kupplungselemente (65, 72; 139, 141; 143) in der eingekuppelten fixierenden Sperrstellung mit der Anpreßkraft beaufschlagt ist, die zumindest geringfügig größer ist als eine durch die elastisch verformten Kupplungsteile (91) der Kupplungselemente (65, 72; 139, 141; 143) hervorgerufene Reaktionskraft.

3. Kupplungsvorrichtung nach Anspruch 1 oder 2, **dadurch gekennzeichnet, daß** zumindest einer der mit den Kupplungselementen (65, 72; 139, 141; 143) versehenen Teile (89, 90) mit der Verstellvorrichtung (50; 51; 125) wirkungsverbunden ist.

4. Kupplungsvorrichtung nach Anspruch 1 oder 2, **dadurch gekennzeichnet, daß** die Kupplungselemente (65, 72; 139, 141; 143) jeweils zumindest einen Kupplungsteil (91) aufweisen.

5. Kupplungsvonichtung nach einem der Ansprüche 1 bis 4, **dadurch gekennzeichnet, daß** die Kupplungselemente (65, 72; 139, 141; 143) in der eingekuppelten fixierenden Sperrstellung die Teile (89, 90) über einen Form- und Reibschluß zwischen den Kupplungselementen (65, 72; 139, 141; 143) lösbar fixieren.

6. Kupplungsvorrichtung nach Anspruch 1 oder 2, **dadurch gekennzeichnet, daß** die im wesentlichen in zur Aufnahmefläche (53, 54, 71; 123; 129; 137, 140; 162) paralleler Richtung übertragbare Kraft insbesondere zwischen 1 % und 30 %, beispielsweise 5 % und 20 %, größer ist als die zum Einrasten erforderliche Anpreßkraft.

7. Kupplungsvorrichtung nach einem der Ansprüche 1 bis 5, **dadurch gekennzeichnet, daß** die Kupplungsteile (91) beider Kupplungselemente (143) jeweils durch ein Oberflächenprofil (151) mit regelmäßig oder unregelmäßig über eine Oberfläche (145) oder Tragkörperoberfläche (146) verteilt angeordneten Profilspitzen (153) und Profiltälern (154) gebildet ist.

8. Kupplungsvorrichtung nach Anspruch 7, **dadurch gekennzeichnet, daß** das Oberflächenprofil (151) durch eine regelmäßige oder unregelmäßige, wiederkehrende Welligkeit (152) gebildet ist.

9. Kupplungsvorrichtung nach Anspruch 7 oder 8, **dadurch gekennzeichnet, daß** die zumindest bereichsweise miteinander einkuppelbaren Kupplungselemente (143), bezogen auf eine vorbestimmbare Fläche, ein identisches Oberflächenprofil (151) ausweisen.

10. Kupplungsvorrichtung nach Anspruch 7 oder 8, **dadurch gekennzeichnet, daß** die zumindest bereichsweise miteinander einkuppelbaren Kupplungselemente (143), bezogen auf eine vorbestimmbare Fläche, ein unterschiedliches Oberflächenprofil (151) aufweisen.

11. Kupplungsvorrichtung nach einem der Ansprüche 7 bis 10, **dadurch gekennzeichnet, daß** eine an einem zur Oberfläche (145) parallel verlaufenden, aus den Profilspitzen (153) und Profiltälern (154) gebildeten mittleren Profil (159) bemessene Öffnungsweite (161) der Profiltäler (154) unterschiedlich ausgebildet ist.

12. Kupplungsvorrichtung nach einem der Ansprüche 7 bis 11, **dadurch gekennzeichnet, daß** durch das unmittelbare Aufeinandertreffen bzw. Aneinanderstoßen zumindest zweier Profilspitzen (153) der Kupplungselemente (143) eine Einformung in der Profiloberfläche (160) zumindest eines Kupplungselementes (143) ausbildbar ist und daß die Kupplungselemente (143) form- und kraftschlüssig zueinander fixiert sind.

13. Kupplungsvorrichtung nach einem der Ansprüche 1 bis 12, **dadurch gekennzeichnet, daß** die Kupplungselemente (65, 72; 139, 141 ; 143) einstückig und materialeinheitlich ausgebildet sind.

14. Kupplungsvorrichtung nach einem der Ansprüche 1 bis 12, **dadurch gekennzeichnet, daß** die Kupplungselemente (65, 72; 139, 141; 143) mehrteilig bzw. mehrschichtig ausgebildet sind.

15. Kupplungsvorrichtung nach Anspruch 14, **dadurch gekennzeichnet, daß** die Kupplungselemente (65, 72; 139, 141; 143) durch mehrere unterschiedliche Eigenschaften, insbesondere Festigkeits- und/oder Zähigkeitseigenschaften, aufweisende Materialien gebildet sind.

16. Kupplungsvorrichtung nach einem der Ansprüche 1 bis 15, **dadurch gekennzeichnet, daß** die Kupplungselemente (65, 72; 139, 141; 143) jeweils einen flächigen Tragkörper (92) aus Kunststoff aufweisen, der über seine von der Aufnahmefläche (53, 54, 71; 123; 129; 137, 140; 162) abgewandten Oberfläche mit einer Vielzahl von verteilt angeordneten Kupplungsteilen (91) versehen ist.

17. Kupplungsvorrichtung nach einem der Ansprüche 1 bis 16, **dadurch gekennzeichnet, daß** zumindest eines der Kupplungselemente (65, 72; 139, 141; 143) eine zu dem weiteren Kupplungselement (65, 72; 139, 141; 143) unterschiedliche Eigenschaft, beispielsweise in bezug auf Festigkeit, Zähigkeit, Elastizitätsmodul etc., aufweist.

18. Kupplungsvorrichtung nach einem der Ansprüche 1 bis 17, **dadurch gekennzeichnet, daß** zumindest eines der Kupplungselemente (65, 72; 139, 141; 143) im Bereich der Eingriffsfläche eine zu dem restlichen Kupplungsteil (91) unterschiedliche Eigenschaft, beispielsweise in bezug auf Festigkeit, Zähigkeit, Elastizitätsmodul etc., aufweist.

19. Kupplungsvorrichtung nach Anspruch 18, **dadurch gekennzeichnet, daß** der zumindest eine Kupplungsteil (91) im Bereich der Eingriffsfläche mit einer elastisch verformbaren, reversiblen Schichte versehen ist.

20. Kupplungsvorrichtung nach einem der Ansprüche 1 bis 19, **dadurch gekennzeichnet, daß** der zumindest eine Kupplungsteil (91) zumindest einen die Eingriffsfläche überragenden, elastisch verformbaren, reversiblen Vorsprung (95) aufweist.

21. Kupplungsvorrichtung nach Anspruch 20, **dadurch gekennzeichnet, daß** der zumindest eine Kupplungsteil (91) mehrere über die Eingriffsfläche verteilt angeordnete und radial umlaufende Vorsprünge (95) aufweist.

22. Kupplungsvorrichtung nach Anspruch 20 oder 21, **dadurch gekennzeichnet, daß** in der eingekuppelten fixierten Sperrstellung die einander gegenüberliegenden und zugewandten Kupplungselemente (65; 72) in Eingriff sind und daß sich die Vorsprünge (95) der Kupplungselemente (65; 72) gegeneinander abstützen.

23. Kupplungsvorrichtung nach einem der Ansprüche 1 bis 21, **dadurch gekennzeichnet, daß** der zumindest eine Kupplungsteil (91) durch mehrere unterschiedliche Eigenschaften, insbesondere Festigkeits- und/oder Zahigkeitscigensehaften, aufweisende Materialien gebildet ist.

24. Kupplungsvorrichtung nach Anspruch 23, **dadurch gekennzeichnet, daß** der zumindest eine Kupplungsteil (91) einen Kern (93) aufweist, der zumindest geringfügig elastisch nachgiebig ausgebildet ist.

25. Kupplungsvorrichtung nach einem der Ansprüche 1 bis 24, **dadurch gekennzeichnet, daß** der zumindest eine Kupplungsteil (91) einen im wesentlichen kegelstumpfförmigen, pyramidenförmigen, zylindrischen etc. Querschnitt aufweist oder fadenartig ausgebildet ist.

26. Kupplungsvorrichtung nach einem der Ansprüche 1 bis 25, **dadurch gekennzeichnet, daß** eine Anzahl der Kupplungsteile (91) und/oder Teilungsabstände (148a, 148b) zwischen zwei zueinander benachbarten Kupplungsteilen (91) von den miteinander in Eingriff bringbaren Kupplungselementen (143) unterschiedlich ausgebildet ist und/oder sind.

27. Kupplungsvorrichtung nach einem der Ansprüche 1 bis 26, **dadurch gekennzeichnet, daß** die nniteinander in Eingriffbringbaren Kupplungselemente (65, 72; 139, 141; 143) jeweils mit zumindest einem zwischen zwei zueinander benachbarten Kupplungsteilen (91) angeordneten Aufnahmebereich (102; 144) zur Aufnahme für zumindest einen in diesen vorragenden Kupplungsteil (91) ausgebildet ist.

28. Kupplungsvorrichtung nach Anspruch 5, **dadurch gekennzeichnet, daß** ein kraftübertragender Anteil der miteinander formschlüssig in Eingriff bringbaren Kupplungsteile (91) zwischen 30 % und 100 %, insbesondere zwischen 50 % und 90 %, beträgt.

29. Kupplungsvorrichtung nach Anspruch 5, **dadurch gekennzeichnet, daß** ein kraftübertragender Anteil der miteinander kraftschlüssig in Eingriff bringbaren Kupplungsteile (91) zwischen 70 % und 0 %, insbesondere zwischen 50 % und 10 %, beträgt.

30. Kupplungsvorrichtung nach einem der Ansprüche 1 bis 12, **dadurch gekennzeichnet, daß** der oder die Teile (89; 90) durch Kunststoff gebildet sind und die Kupplungselemente (65, 72; 139, 141; 143) aufextrudiert sind.

31. Kupplungsvoffichtung nach einem der Ansprüche 1 bis 30, **dadurch gekennzeichnet, daß** der erste Teil (89) durch ein Tragelement (9) oder eine Halterung (7) und der weitere Teil (90) durch ein Bodenelement (67) einer Verstell- und Fixiereinnchtans (3, 4), insbesondere für eine Lenkwelle (2), gebildet ist und daß wenigstens ein streifenförmiges Kupplungselement (65; 143) mit dem Tragelement (9) und wenigstens ein weiteres streifenförmiges Kupplungselement (72; 143) mit dem Bodenelement (67) form- und/oder kraftschlüssig verbunden ist.

32. Kupplungsvomchtung nach Anspruch 31, **dadurch gekennzeichnet, daß** das Tragelement (9) wenigstens einen in Längsrichtung der Lenkwelle (2) verlaufenden Längsschlitz (31) aufweist und an einer innenliegenden Aufnahmefläche (54) in einem den Längsschlitz (31) begrenzenden Bereich in Längserstreckung des Längsschlitzes (31) zumindest ein, insbesondere mehrere streifenförmige Kupplungselemente (65; 143) angeordnet sind.

33. Kupplungsvorrichtung nach Anspruch 31 oder 32, **dadurch gekennzeichnet, daß** die Halterung (7) wenigstens einen quer zur Längsrichtung der Lenkwelle (2) verlaufenden Durchbruch (30) aufweist und an einer außenliegenden Aufnahmefläche (53) der Halterung (7) in einem den Durchbruch (30) begrenzenden Bereich in Längserstreckung des gekrümmten, insbesondere einer Schwenkachse (24) zugewandt konvexen schlitzförmigen Durchbruches (30) zumindest ein, insbesondere mehrere parallel zum Durchbruch (30) und parallel zueinander verlaufende streifenförmige Kupplungselemente (65; 143) angeordnet sind.

34. Kupplungsvorrichtung nach einem der Ansprüche 31 bis 33, **dadurch gekennzeichnet, daß** wenigstens eine Verstellvorrichtung (51) zwischen der Lenkwelle (2) und einem Tragelement (9) und/oder eine weitere Verstellvorrichtung (50) zwischen der Halterung (7) und einem Betätigungselement (55) angeordnet ist und die Verstellvorrichtungen (50; 51) und das Betätigungselement (55) auf einem Spannelement (33) konzentrisch und aufeinander ausgerichtet gehalten sind.

35. Kupplungsvorrichtung nach einem der Ansprüche 1 bis 30, **dadurch gekennzeichnet, daß** der erste Teil (89) durch einen Führungsteil (118) und der weitere Teil (90) durch einen Tragteil einer Verstell- und Fixiereinrichtung (117, 124), insbesondere für einen Fahrzeugsitz (104), gebildet ist und daß wenigstens ein streifenförmiges Kupplungselement (65; 143) der Kupplungsvorrichtung (88) mit dem Führungsteil (118) und ein weiteres streifenförmiges Kupplungselement (72; 143) mit dem Tragteil form- und/oder kraftschlüssig verbunden ist.

36. Kupplungsvorrichtung nach einem der Ansprüche 1 bis 30, **dadurch gekennzeichnet, daß** der erste Teil (89) durch ein rahmenartiges Stützelement (114) und der weitere Teil (90) durch einen Rückenteil (106) eines Fahrzeugsitzes (104) bzw. Sitzes gebildet ist und daß die Kupplunsselammte, (65, 72; 143) zwischen dem Stützelement (114) und dem Rückenteil (106) zur lösbaren Fixierung einer eingestellten veränderbaren Neigung zwischen dem Rückenteil (106) und dem Sitzteil (105) angeordnet sind.

37. Kupplungsvorrichtung nach einem der Ansprüche 1 bis 30, **dadurch gekennzeichnet, daß** der erste Teil (89) durch einen Karosserieteil eines Fahrzeuges und der weitere Teil (90) durch eine Höhenverstelleinrichtung eines bandartigen Rückhalteelementes, insbesondere eines Gurtes, gebildet ist und daß die Kupplungselemente (65, 72; 143) zwischen dem Karosserieteil und der Höhenverstelleinrichtung zur lösbaren Fixierung einer eingestellten veränderbaren Höhe bzw. Länge desselben angeordnet sind.

38. Kupplungsvorrichtung nach einem der Ansprüche 1 bis 30, **dadurch gekennzeichnet, daß** der erste Teil (89) und der weitere Teil (90) rohrförmig ausgebildet und ineinander angeordnet sind und daß der erste innenliegende Teil (89) über seinen eine Aufnahme fläche (137) bildenden Außenumfang mit zumindest einem Kupplungselement (139) und der weitere außenliegende Teil (90) an seiner dem Außenumfang des ersten Teiles (89) zugewandten, eine Aufnahmefläche (140) bildenden Innenumfang mit zumindest einem weiteren Kupplungselement (141) versehen ist.

39. Kupplungsvorrichtung nach Anspruch 38, **dadurch gekennzeichnet, daß** wenigstens Teilbereiche eines der rohrförmigen Teile (89, 90), insbesondere der innenliegende Teil (89), in zur Aufnahmefläche (137; 140) radialer Richtung elastisch verformbar ausgebildet ist und dieser zur Druckbeaufschlagung eines Hohlraumes (142) über eine Verbindungsleitung mit einer Verstellvorrichtung, insbesondere einem Stellantrieb, leitungsverbunden ist.

40. Kupplungsvorrichtung nach einem der Anspräche 1 bis 39, **dadurch gekennzeichnet, daß** die Verstellvorrichtung (50; 51; 125) für zumindest einen der Teile (89, 90), insbesondere für zumindest eines der Kupplungselemente (65, 72; 139, 141; 143) über elektrische, mechanische, pneumatische, hydraulische Stellantriebe betätigbar ist.

41. Verwendung der Kupplungsvorrichtung nach einem der Ansprüche 1 bis 40 als energieabsorbierende Deformationsanordnung für eine in Längsrichtung und/oder quer zur Längsrichtung der Lenkwelle einwirkende Kraft bzw. Energie.

## Claims

1. Coupling mechanism (88) for at least two relatively adjustable parts (89, 90), each of which is provided with at least one coupling element (65, 72; 139, 141; 143) and the coupling elements (65, 72; 139, 141; 143) have coupling parts (91) standing at least slightly proud of a bearing surface (53, 54, 71; 123; 129; 137, 140; 162) of the parts (89, 90) and are adjustable by means of an adjusting device (50; 51; 125) at least at an angle to, in particular perpendicular to, the bearing surface (53, 54; 71; 123; 129; 137; 140; 162) between a disengaged released open position and an engaged, fixing locked position, whereby locating surfaces of the coupling parts (91) of the coupling elements (65, 72; 139, 141; 143) are supported against one another with a pre-settable pressing force in the locked position, **characterised in that** the locating surfaces have a profile and the coupling parts (91) of the coupling elements (65, 72; 139, 141; 143) are made from an elastically flexible and reversible plastic, for example a thermoplast, and are elastically deformable under the action of the pressing force when the coupling elements (65, 72; 139, 141; 143) are in the located, fixing locked position.

2. Coupling mechanism as claimed in claim 1, **characterised in that** at least one of the coupling elements (65, 72; 139, 141; 143) is pressurised into the located fixing locked position by the pressing force, which is at least slightly greater than a reaction force induced by the elastically deformable coupling parts (91) of the coupling elements (65, 72; 139, 141; 143).

3. Coupling mechanism as claimed in claim 1 or 2, **characterised in that** at least one of the parts (89, 90) provided with the coupling elements (65, 72; 139, 141; 142) is actively linked to the adjusting device (50; 51; 125).

4. Coupling mechanism as claimed in claim 1 or 2, **characterised in that** the coupling elements (65, 72; 139, 141; 143) each have at least one coupling part (91).

5. Coupling mechanism as claimed in one of claims 1 to 4, **characterised in that** when the coupling elements (65, 72; 139, 141; 143) are in the located, fixing locked position, the parts (89, 90) are releasably fixed by means of a form-fitting and friction-locking connection between the coupling elements (65, 72; 139, 141; 143).

6. Coupling mechanism as claimed in claim 1 or 2, **characterised in that** the force which can be transmitted in the direction substantially parallel with the bearing surface (53; 54; 71; 123; 129, 137, 140; 162) is specifically between 1 % and 30 %, for example 5 % and 20 %, greater than a pressure force needed for locating purposes.

7. Coupling mechanism as claimed in one of claims 1 to 5, **characterised in that** the coupling parts (91) of both coupling elements (143) each have a surface profile (151) with profile crests (153) and profile troughs (154) distributed regularly or irregularly on a surface (145) or support body surface (146).

8. Coupling mechanism as claimed in claim 7, **characterised in that** the surface profile (151) is provided in the form of a regular or irregular recurring ripple pattern (152).

9. Coupling mechanism as claimed in claim 7 or 8, **characterised in that** the coupling elements (143), which can be located in at least certain regions with one another, have an identical surface profile (151) by reference to a pre-definable surface.

10. Coupling mechanism as claimed in claim 7 or 8, **characterised in that** the coupling elements (143) which can be located in at least certain regions with one another have a different surface profile (151) by reference to a pre-definable surface.

11. Coupling mechanism as claimed in of claims 7 to 10, **characterised in that** an opening width (161) of the profile troughs (154) extending parallel with the surface (145) measured with respect to a mean profile (159) based on the profile crests (153) and profile troughs (154) differs.

12. Coupling mechanism as claimed in of claims 7 to 11, **characterised in that** if at least two profile crests (153) of the coupling elements (143) come into contact with one another or abut within one another, at least one coupling element (143) is designed so that it bends in the profiled surface (160) and the coupling elements (143) are fixed to one another in a form-fitting and friction-locking arrangement.

13. Coupling mechanism as claimed in of claims 1 to 12, **characterised in that** the coupling elements (65, 72; 139, 141; 143) are made as an integral piece and of a uniform material.

14. Coupling mechanism as claimed in of claims 1 to 12, **characterised in that** the coupling elements (65, 72; 139, 141; 143) are made up of multiple parts or multiple layers.

15. Coupling mechanism as claimed in claim 14, **characterised in that** the coupling elements (65, 72; 139, 141; 143) are made from materials with different properties, in particular strength and/or toughness properties.

16. Coupling mechanism as claimed in one of claims 1 to 15, **characterised in that** the coupling elements (65, 72; 139, 141; 143) each have a flat support body (92) made from plastic, which is provided with a plurality of coupling parts (91) distributed across its surface remote from the bearing surface (53, 54, 71; 123; 129; 137, 140; 162).

17. Coupling mechanism as claimed in one of claims 1 to 16, **characterised in that** at least one of the coupling elements (65, 72; 139; 141; 143) has a property that is different from the other coupling element (65, 72; 139, 141; 143), for example in terms of strength, toughness, modulus of elasticity, etc..

18. Coupling mechanism as claimed in one of claims 1 to 17, **characterised in that** at least one of the coupling elements (65, 72; 139, 141; 143) has a property in the region of the locating surface that is different from the rest of the coupling part (91), for example in terms of strength, toughness, modulus of elasticity, etc..

19. Coupling mechanism as claimed in claim 18, **characterised in that** at least one coupling part (91) is provided with an elastically deformable reversible layer in the region of the locating surface.

20. Coupling mechanism as claimed in one of claims 1 to 19, **characterised in that** at least one coupling part (91) has at least one elastically deformable and reversible projection (95) standing proud of the locating surface.

21. Coupling mechanism as claimed in claim 20, **characterised in that** the at least one coupling part (91) has several radial, peripherally extending projections (95) distributed across the locating surface.

22. Coupling mechanism as claimed in claim 20 or 21, **characterised in that** in the located, fixed, locking position, the oppositely lying mutually facing coupling elements (65; 72) are engaged and the projections (95) of the coupling elements (65; 72) are supported against one another.

23. Coupling mechanism as claimed in one of claims 1 to 21, **characterised in that** the at least one coupling part (91) is made from materials having several different properties, in particular strength and/or toughness properties.

24. Coupling mechanism as claimed in claim 23, **characterised in that** at least one coupling part (91) has a core (93) which is at least slightly elastically flexible.

25. Coupling mechanism as claimed in one of claims 1 to 24, **characterised in that** the at least one coupling part (91) has a cross section that is substantially frustoconical, pyramid-shaped, cylindrical, etc., or has a filament-like arrangement.

26. Coupling mechanism as claimed in one of claims 1 to 25, **characterised in that** a number of the coupling parts (91) and/or dividing spaces (148a, 148b) between two adjacent coupling parts (91) of mutually locatable coupling elements (143) is and/or are different.

27. Coupling mechanism as claimed in of claims 1 to 26, **characterised in that** the mutually locatable coupling elements (65, 72; 139, 141; 143) each have at least one bearing region (102; 144) disposed between two mutually adjacent coupling parts (91) as a bearing for several coupling parts (91) which project into them.

28. Coupling mechanism as claimed claim 5, **characterised in that** a force-transmitting proportion of the coupling parts (91) which can be brought into engagement with one another in a form-fitting arrangement is between 30 % and 100%, in particular between 50 % and 90%.

29. Coupling mechanism as claimed claim 5, **characterised in that** a force-transmitting proportion of the coupling parts (91) which can be brought into engagement with one another in a friction-locking arrangement is between 70 % and 0%, in particular between 50% and 10%.

30. Coupling mechanism as claimed in of claims 1 to 12, **characterised in that** the part or parts (89; 90) is or are made from plastic and the coupling elements (65, 72; 139, 141; 143) are extruded on.

31. Coupling mechanism as claimed in one of claims 1 to 30, **characterised in that** the first part (89) is provided in the form of a support element (9) or a mount (7) and the second part (90) is provided in the form of a base element (67) of an adjusting and fixing mechanism (3, 4), in particular for a steering shaft (2), and at least one strip-shaped coupling element (65; 143) is joined to the support element (9) and at least one other strip-shaped coupling element (72; 143) is joined to the base element (67) in a form-fitting and/or friction-locking connection.

32. Coupling mechanism as claimed in claim 31, **characterised in that** the support element (9), has at least one slot (31) extending in the longitudinal direction of the steering shaft (2) and at least one, in particular several, strip-shaped coupling elements (65; 143) are disposed on an internally lying bearing surface (54) in a region bounding the slot (31) in the longitudinal extension of the slot (31).

33. Coupling mechanism as claimed in claim 31 or 32, **characterised in that** the mount (7), has at least one orifice (30) extending transversely to the longitudinal direction of the steering shaft (2) and at least one, in particular several, strip-shaped coupling elements (65; 143) extending parallel with the orifice (30) and parallel with each other are disposed on an outwardly lying bearing surface (53) of the mount (7) in a region bounding the orifice (30) in the longitudinal extension of the orifice (30), which is curved and in particular convexly slot-shaped facing a pivot axis (24).

34. Coupling mechanism as claimed in one of claims 1 to 33, **characterised in that** at least one adjusting mechanism (51) is disposed between the steering shaft (2) and a support element (9) and/or another adjusting device (50) is disposed between the mount (7) and an operating element (55) and the adjusting devices (50; 51) and the operating element (55) are retained concentrically and in alignment with one another by a clamping element (33).

35. Coupling mechanism as claimed in one of claims 1 to 30, **characterised in that** the first part (89) is provided in the form of a guide part (118) and the other part (90) is provided in the form of a support part of an adjusting and fixing mechanism (117, 124), in particular for a vehicle seat (104), and at least one strip-shaped coupling element (65; 143) of the coupling mechanism (88) is joined to the guide part (118) and another strip-shaped coupling element (72; 143) is joined to the support part in a form-fitting and/or friction -locking connection.

36. Coupling mechanism as claimed in one or more of claims 1 to 30, **characterised in that** the first part (89) is provided in the form of a frame-type support element (114) and the other part (90) is a back part (106) of a vehicle seat (104) or seat and the coupling elements (65, 72; 143) are disposed between the support element (114) and the back part (106) for releasably fixing a set variable inclination between the back part (106) and the seat part (105).

37. Coupling mechanism as claimed in one of claims 1 to 30, **characterised in that** the first part (89) is provided in the form of a body part of a motor vehicle and the other part (90) is a height adjusting mechanism of a strap-type restraining element, in particular a belt, and the coupling elements (65, 72; 143) are disposed between the body part and the height adjusting mechanism for releasably fixing a variably set height or length thereof.

38. Coupling mechanism as claimed in one of claims 1 to 30, **characterised in that** the first part (89) and the other part (90) are tubular and are inserted one inside the other and the first inner part (89) has at least one coupling element (139) around its outer periphery forming a bearing surface (137) and the other, externally lying, part (90) is provided with at least one other coupling element (141) on its internal periphery directed towards the outer periphery of the first part (89) and forming a bearing surface (140).

39. Coupling mechanism as claimed in claim 38, **characterised in that** at least part-regions of one of the tubular parts (89, 90), in particular the inner part (89), is designed so as to be elastically deformable in the direction radially disposed with respect to the bearing surface (137; 140) and is line-connected to an adjusting mechanism, in particular an actuator, via a connecting line in order to apply pressure to a cavity (142).

40. Coupling mechanism as claimed in one of claims 1 to 39, **characterised in that** the adjusting device (50; 51; 125) for at least one of the parts (89, 90), in particular for at least one of the coupling elements (65, 72; 139, 141; 143), can be operated by electrical, mechanical, pneumatic, hydraulic actuators.

41. Use of the coupling mechanism as claimed in one of claims 1 to 40, as an energy-absorbing deformation system for a force and energy acting in the longitudinal direction and/or transversely to the longitudinal direction of the steering shaft.

## Revendications

1. Dispositif d'accouplement (88) pour au moins deux parties (89, 90) ajustables l'une par rapport à l'autre, dont chacune est pourvue d'au moins un élément d'accouplement (65, 72 ; 139, 141 ; 143), et les éléments d'accouplement (65, 72; 139, 141; 143) présentent des parties d'accouplement (91) faisant au moins légèrement saillie sur une face de réception (53, 54, 71 ; 123, ; 129 ; 137, 140 ; 162) des parties (89, 90) et sont disposés d'une manière déplaçable par un dispositif de déplacement (50 ; 51 ; 125) au moins en biais, en particulier perpendiculairement à la face de réception (53, 54, 71 ; 123 ; 129 ; 137, 140 ; 162) entre une position d'ouverture détendue désaccouplée et une position de blocage fixante accouplée, où des faces d'engagement des parties d'accouplement (91) des éléments d'accouplement (65, 72 ; 139, 141 ; 143) s'appuient en position de blocage avec une force de pression pré-réglable les unes contre les autres, **caractérisé en ce que** les faces d'engagement présentent un profil, et que les parties d'accouplement (91) des éléments d'accouplement (65, 72 ; 139, 141 ; 143) sont réalisées en un matériau synthétique élastique souple réversible, par exemple en une matière thermoplastique et, dans la position de blocage fixée accouplée des éléments d'accouplement (65, 72 ; 139, 141 ; 143) sont déformables élastiquement sous l'effet de la force d'application.

2. Dispositif d'accouplement selon la revendication 1, **caractérisé en ce qu'**au moins l'un des éléments d'accouplement (65, 72 ; 139, 141 ; 143), dans la position de blocage fixante accouplée, est soumis à la force d'application qui est au moins légèrement plus grande qu'une force de réaction provoquée par les parties d'accouplement élastiquement déformées (91) des éléments d'accouplement (65, 72 ; 139, 141 ; 143).

3. Dispositif d'accouplement selon la revendication 1 ou 2, **caractérisé en ce qu'**au moins l'une des parties (89, 90) munies des éléments d'accouplement (65, 72 ; 139, 141 ; 143) est fonctionnellement reliée au dispositif de déplacement (50 ; 51 ; 125).

4. Dispositif d'accouplement selon la revendication 1 ou 2, **caractérisé en ce que** les éléments d'accouplement (65, 72 ; 139, 141 ; 143) présentent à chaque fois au moins une partie d'accouplement (91).

5. Dispositif d'accouplement selon l'une des revendications 1 à 4, **caractérisé en ce que** les éléments d'accouplement (65, 72 ; 139, 141 ; 143), en position de blocage fixante accouplée, fixent relâchablement les parties (89, 90) par une concordance des formes et à friction entre les éléments d'accouplement (65, 72 ; 139, 141 ; 143).

6. Dispositif d'accouplement selon la revendication 1 ou 2, **caractérisé en ce que** la force pouvant être transmise sensiblement dans la direction parallèle à la face de réception (53, 54, 71 ; 123 ; 129 ; 137, 140 ; 162), en particulier entre 1% et 30%, par exemple entre 5% et 20%, est plus grande que la force d'application requise pour l'encliquetage.

7. Dispositif d'accouplement selon l'une des revendications 1 à 5, **caractérisé en ce que** les parties d'accouplement (91) des deux éléments d'accouplement (143) sont formées à chaque fois par un profil de surface (151) avec des pointes de profil (153) et des creux de profil (154) distribués régulièrement ou irrégulièrement sur une surface (145) ou la surface de corps de support (146).

8. Dispositif d'accouplement selon la revendication 7, **caractérisé en ce que** le profil de surface (151) est formé par une ondulation (152) répétée régulière ou irrégulière.

9. Dispositif d'accouplement selon la revendication 7 ou 8, **caractérisé en ce que** les éléments d'accouplement (143) pouvant être accouplés au moins par zones les uns avec les autres, par rapport à une face prédéfinissable, présentent un profil de surface identique (151).

10. Dispositif d'accouplement selon la revendication 7 ou 8, **caractérisé en ce que** les éléments d'accouplement (143) pouvant être accouplés au moins par zones les uns avec les autres, par rapport à une face prédéfinissable, présentent un profil de surface différent (151).

11. Dispositif d'accouplement selon l'une des revendications 7 à 10, **caractérisé en ce qu'**une largeur d'ouverture (161) des creux de profil (154) mesurée à un profil médian (159) s'étendant parallèlement à la surface (145), formé par les pointes de profil (153) et les creux de profil (154), est réalisée différemment.

12. Dispositif d'accouplement selon l'une des revendications 7 à 11, **caractérisé en ce que** par le contact direct respectivement le heurt d'au moins deux pointes de profil (153) des éléments d'accouplement (143), un creux peut être formé dans la surface de profil (160) d'au moins un élément d'accouplement (143), et que les éléments d'accouplement (143) sont fixés par concordance des formes et par force les uns aux autres.

13. Dispositif d'accouplement selon l'une des revendications 1 à 12, **caractérisé en ce que** les éléments d'accouplement (65, 72; 139, 141; 143) sont réalisés en une pièce et dans le même matériau.

14. Dispositif d'accouplement selon l'une des revendications 1 à 12, **caractérisé en ce que** les éléments d'accouplement (65, 72; 139, 141; 143) sont réalisés en plusieurs parties, respectivement en plusieurs couches.

15. Dispositif d'accouplement selon la revendication 14, **caractérisé en ce que** les éléments d'accouplement (65, 72; 139, 141; 143) sont formés par des matériaux présentant plusieurs caractéristiques différentes, en particulier des caractéristiques de solidité et/ou de ténacité.

16. Dispositif d'accouplement selon l'une des revendications 1 à 15, **caractérisé en ce que** les éléments d'accouplement (65, 72; 139, 141; 143) présentent à chaque fois un corps de support plan (92) en matériau synthétique qui présente sur sa surface éloignée de la face de réception (53, 54, 71; 123; 129; 137, 140; 162) un grand nombre de parties d'accouplement réparties (91).

17. Dispositif d'accouplement selon l'une des revendications 1 à 16, **caractérisé en ce qu'**au moins l'un des éléments d'accouplement (65, 72; 139, 141; 143) présente une caractéristique différente de l'autre élément d'accouplement (65, 72; 139, 141; 143) par exemple en ce qui concerne la solidité, la ténacité, le module d'élasticité, etc.

18. Dispositif d'accouplement selon l'une des revendications 1 à 17, **caractérisé en ce qu'**au moins l'un des éléments d'accouplement (65, 72; 139, 141; 143) présente dans la zone de la face d'engagement une caractéristique qui diffère de la partie d'accouplement restante (91), par exemple en ce qui concerne la solidité, ténacité, le module d'élasticité, etc.

19. Dispositif d'accouplement selon la revendication 18, **caractérisé en ce qu'**au moins une partie d'accouplement (91) présente dans la zone de la face d'engagement une couche réversible, déformable élastiquement.

20. Dispositif d'accouplement selon l'une des revendications 1 à 19, **caractérisé en ce qu'**au moins une partie d'accouplement (91) présente au moins une saillie réversible élastiquement déformable (95) faisant saillie sur la face d'engagement.

21. Dispositif d'accouplement selon la revendication 20, **caractérisé en ce qu'**au moins une partie d'accouplement (91) présente plusieurs saillies (95) réparties sur la face d'engagement et s'étendant radialement tout autour.

22. Dispositif d'accouplement selon la revendication 20 ou 21, **caractérisé en ce que** dans la position de blocage fixée accouplée, les éléments d'accouplement (65; 72) qui se font face et qui sont orientés l'un vers l'autre sont en prise, et **en ce que** les saillies (95) des éléments d'accouplement (65; 72) s'appuient les unes contre les autres.

23. Dispositif d'accouplement selon l'une des revendications 1 à 21, **caractérisé en ce qu'**au moins une partie d'accouplement (91) est formée par plusieurs matériaux ayant des caractéristiques différentes, en particulier des caractéristiques de solidité et/ou de ténacité.

24. Dispositif d'accouplement selon la revendication 23, **caractérisé en ce qu'**au moins une partie d'accouplement (91) présente un noyau (93) qui est au moins légèrement élastique.

25. Dispositif d'accouplement selon l'une des revendications 1 à 24, **caractérisé en ce qu'**au moins une partie d'accouplement (91) présente une section transversale sensiblement tronconique, en forme de pyramide, cylindrique etc., ou est réalisée en forme de fil.

26. Dispositif d'accouplement selon l'une des revendications 1 à 25, **caractérisé en ce qu'**un nombre de parties d'accouplement (91) et/ou d'écarts de séparation (148a, 148b) entre deux parties d'accouplement avoisinantes (91) d'éléments d'accouplement (143) pouvant être mis en prise est et/ou sont réalisés différemment.

27. Dispositif d'accouplement selon l'une des revendications 1 à 26, **caractérisé en ce que** les éléments d'accouplement (65, 72; 139, 141; 143) pouvant être mis en prise sont réalisés à chaque fois avec au moins une zone de réception (102; 144) disposée entre deux parties d'accouplement avoisinantes (91) pour la réception d'au moins une partie d'accouplement (91) faisant saillie dans celle-ci.

28. Dispositif d'accouplement selon la revendication 5, **caractérisé en ce qu'**une part de transmission de force des parties d'accouplement (91) pouvant être mises en prise par concordance des formes représente entre 30% et 100%, en particulier entre 50% et 90%.

29. Dispositif d'accouplement selon la revendication 5, **caractérisé en ce qu'**une part de transmission de force des éléments d'accouplement (91) pouvant être mis en prise par force représente entre 70% et 0%, en particulier entre 50% et 10%.

30. Dispositif d'accouplement selon l'une des revendications 1 à 12, **caractérisé en ce que** la ou les parties (89; 90) sont réalisées en matériau synthétique, et que les éléments d'accouplement (65, 72; 139, 141; 143) sont appliqués par extrusion.

31. Dispositif d'accouplement selon l'une des revendications 1 à 30, **caractérisé en ce que** la première partie (89) est formée par un élément de support (9) ou un support (7) et l'autre partie (90) par un élément de fond (67) d'une installation de déplacement et de fixation (3, 4), en particulier pour un arbre de direction (2), et **en ce qu'**au moins un élément d'accouplement en forme de bande (65; 143) est relié par concordance des formes et/ou par force à l'élément de support (9) et au moins un autre élément d'accouplement en forme de bande (72; 143) à l'élément de fond (67).

32. Dispositif d'accouplement selon la revendication 31, **caractérisé en ce que** l'élément de support (9) présente au moins une fente longitudinale (31) s'étendant dans la direction longitudinale de l'arbre de direction (2), et **en ce que** sont disposés à une face de réception (54) située à l'intérieur, dans une zone limitant la fente longitudinale (31), dans l'extension longitudinale de la fente longitudinale (31) au moins un, en particulier plusieurs éléments d'accouplement en forme de bande (65; 143).

33. Dispositif d'accouplement selon la revendication 31 ou 32, **caractérisé en ce que** le support (7) présente au moins un perçage (30) s'étendant transversalement à la direction longitudinale de l'arbre de direction (2), et que sont disposés à une face de réception (53) située à l'extérieur du support (7), dans une zone limitant le perçage (30), dans l'extension longitudinale du perçage courbé convexe en forme de fente (30), orienté en particulier vers un axe de pivotement (24), au moins un, en particulier plusieurs éléments d'accouplement en forme de bande (65; 143) s'étendant parallèlement au perçage (30) et parallèlement les uns aux autres.

34. Dispositif d'accouplement selon l'une des revendications 31 à 33, **caractérisé en ce qu'**au moins un dispositif de déplacement (51) est disposé entre l'arbre de direction (2) et un élément de support (9) et/ou un autre dispositif de déplacement (50) entre le support (7) et un élément d'actionnement (55), et que les dispositifs de déplacement (50; 51) et l'élément d'actionnement (55) sont retenus sur un élément de serrage (33) d'une manière concentrique et orientés les uns vers les autres.

35. Dispositif d'accouplement selon l'une des revendications 1 à 30, **caractérisé en ce que** la première partie (89) est formée par une partie de guidage (118) et l'autre partie (90) par une partie de support d'une installation de déplacement et de fixation (117, 124), en particulier pour un siège de véhicule (104), et **en ce qu'**au moins un élément d'accouplement en forme de bande (65; 143) du dispositif d'accouplement (88) est relié par concordance des formes et par force à la partie de guidage (118) et un autre élément d'accouplement en forme de bande (72; 143) à la partie de support.

36. Dispositif d'accouplement selon l'une des revendications 1 à 30, **caractérisé en ce que** la première partie (89) est formée par un élément d'appui en forme de cadre (114) et l'autre partie (90) par une partie de dos (106) d'un siège de véhicule (104) respectivement d'un siège, et que les éléments d'accouplement (65, 72; 143) sont disposés entre l'élément d'appui (114) et la partie de dos (106) pour la fixation relâchable d'une position inclinée modifiable entre la partie de dos (106) et la partie de siège (105).

37. Dispositif d'accouplement selon l'une des revendications 1 à 30, **caractérisé en ce que** la première partie (89) est formée par une partie de carrosserie d'un véhicule et l'autre partie (90) par une installation de déplacement en hauteur d'un élément de retenue en forme de bande, en particulier d'une ceinture, et **en ce que** les éléments d'accouplement (65, 72; 143) sont disposés entre la partie de carrosserie et l'installation de déplacement en hauteur pour la fixation relâchable d'une hauteur ou longueur réglée modifiable de celle-ci.

38. Dispositif d'accouplement selon l'une des revendications 1 à 30, **caractérisé en ce que** la première partie (89) et l'autre partie (90) sont réalisés d'une manière tubulaire et sont disposées l'une dans l'autre, et **en ce que** la première partie située à l'intérieur (89) présente sur son pourtour extérieur formant une face de réception (137) au moins un élément d'accouplement (139) et l'autre partie située à l'extérieur (90) à son pourtour intérieur orienté vers le pourtour extérieur de la première partie (89) au moins un autre élément d'accouplement (141).

39. Dispositif d'accouplement selon la revendication 38, **caractérisé en ce qu'**au moins des zones partielles d'une des parties tubulaires (89, 90), en particulier la partie située à l'intérieur (89) est réalisée d'une manière déformable élastiquement dans la direction radiale à la face de réception (137; 140), et celle-ci, en vue d'une sollicitation en pression d'un espace creux (142), est reliée par une ligne de liaison à un dispositif de déplacement, en particulier une commande de positionnement.

40. Dispositif d'accouplement selon l'une des revendications 1 à 39, **caractérisé en ce que** le dispositif de déplacement (50; 51; 125) pour au moins l'une des parties (89, 90), en particulier pour au moins l'un des éléments d'accouplement (65, 72; 139, 141; 143) est actionnable par des commandes de positionnement électriques, mécaniques, pneumatiques, hydrauliques.

41. Utilisation du dispositif d'accouplement selon l'une des revendications 1 à 40 comme agencement de déformation absorbant de l'énergie pour une force ou énergie agissant dans la direction longitudinale et/ou transversalement à la direction longitudinale de l'arbre de direction.
